# EUROPEAN PATENT SPECIFICATION

(11) **EP 3 975 444 B1**
(45) Date of publication and mention of the grant of the patent: **25.09.2024**
(21) Application number: 20826376.4
(22) Date of filing: 28.05.2020
(51) Int. Cl.: H04B 7/06, H04B 7/0452, H04L 27/26, H04L 5/00, H04L 1/08, H04L 1/00

(54) **CHANNEL SOUNDING METHOD AND COMMUNICATION DEVICE**
CHANNEL-SOUNDING-VERFAHREN UND KOMMUNIKATIONSVORRICHTUNG
PROCÉDÉ DE SONDAGE DE CANAL ET DISPOSITIF DE COMMUNICATION

(30) Priority: 19.06.2019 CN 201910533150
(43) Date of publication of application: 30.03.2022
(60) Divisional application: 24195217.5
(73) Proprietor: Huawei Technologies Co., Ltd., Longgang District Shenzhen, Guangdong 518129 (CN)
(72) Inventor: GUO, Yuchen, Shenzhen, Guangdong 518129 (CN); YU, Jian, Shenzhen, Guangdong 518129 (CN); LI, Yunbo, Shenzhen, Guangdong 518129 (CN)
(74) Representative: Gill Jennings & Every LLP
(86) International application number: PCT/CN2020/092948
(87) International publication number: WO 2020/253492

(56) References cited:
- WO-A1-2018/093132
- CN-A- 102 769 516
- CN-A- 109 547 072
- CN-A- 109 714 092
- CN-A- 109 756 256
- US-A1- 2017 195 026
- US-A1- 2020 059 808
- SUNGJIN PARK (LG ELECTRONICS): "Multi-AP Transmission Procedure", vol. 802.11 EHT, 12 March 2019 (2019-03-12), pages 1 - 18, XP068148191, Retrieved from the Internet <URL:https://mentor.ieee.org/802.11/dcn/19/11-19-0448-00-0eht-multi-ap-transmission-procedure.pptx> [retrieved on 20190312]
- ROSS JIAN YU (HUAWEI): "HE NDPA Frame Format", vol. 802.11ax, no. 1, 18 May 2016 (2016-05-18), pages 1 - 19, XP068119437, Retrieved from the Internet <URL:https://mentor.ieee.org/802.11/dcn/16/11-16-0609-01-00ax-he-ndpa-frame-format.pptx> [retrieved on 20160518]

## Description

### TECHNICAL FIELD

Embodiments of this application relate to the communication field, and in particular, to a channel sounding method and a communication apparatus.

### BACKGROUND

With development of a wireless network and gradual popularization of a wireless local area network (Wireless Local Area Network, WLAN) technology, WLAN devices are deployed increasingly densely. Because wireless access points (Access Points, APs) are easy to deploy, the APs are more frequently used. However, as APs are deployed more densely, inter-cell interference is caused. How to reduce the inter-cell interference and improve quality of service for users through collaboration between the APs becomes an urgent problem to be resolved.

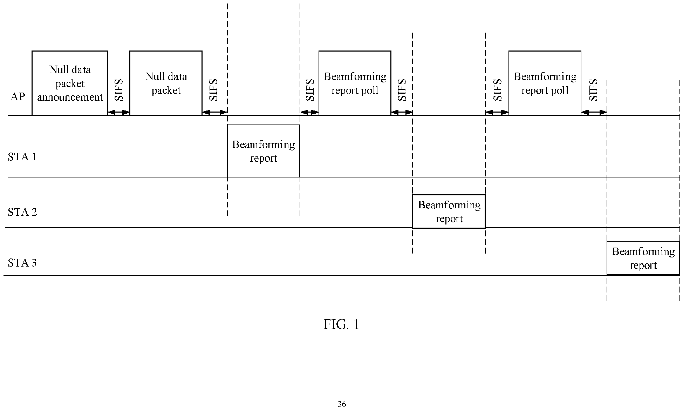

A prerequisite for collaboration between APs is to establish a collaboration relationship based on a channel sounding result. In the conventional technology, for channel sounding of an AP, refer to a channel sounding (Sounding) process in 802.11ac, as shown in FIG. 1. Specifically, the AP first sends a null data packet announcement (Null Data Packet Announcement, NDPA) frame to announce a station (Station, STA) that needs to perform channel sounding and a related channel sounding parameter, and then broadcasts an NDP frame after short interframe space (Short Inter-frame Space, SIFS), where the NDP frame does not carry any data field part. The STA may perform channel estimation on the AP based on the received NDP frame, and generate a beamforming report (Beamforming Report, BFR), where the BFR includes but is not limited to channel state information (Channel State Information, CSI) or a channel quality indicator (Channel Quality Indicator, CQI). Subsequently, the AP sends a beamforming report poll (BF Report Poll, BFRP) to the STA, to obtain, from a STA, a channel state frame that has not been fed back or that is fed back incorrectly.

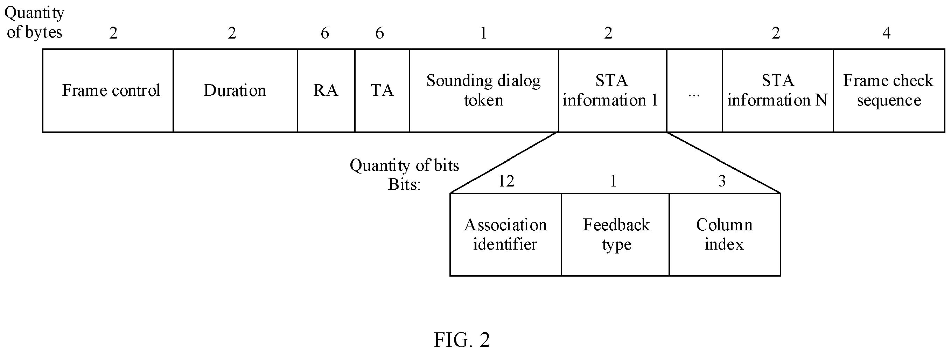

In the conventional technology, a very high throughput (Very High Throughput, VHT) NDPA frame is used to identify an NDPA frame in the 802.11 ac standard, and a frame format of the NDPA frame is shown in FIG. 2. A sounding dialog token (Sounding Dialog Token) field is used to solicit a sequence number of channel sounding. The NDPA frame further includes a STA information field, and the field includes feedback instruction information of a plurality of STAs. The STA information field may further include a STA association identifier (Association Identifier, AID), a feedback type (Feedback Type), and a number of columns (Number of columns, Nc) field. The three fields each are used to indicate an associated STA, whether a feedback mode is of single-user or of multi-user, and the number of columns to be fed back. In addition, the STA information field may further include a frame control (Frame Control, FC) field, where the FC field includes information about a type (Type) and information about a subtype (Subtype), and is used to identify a type of the NDPA frame. A receiver address (Receiver Address, RA) field and a transmitter address (Transmitter Address, TA) field are used to identify a receive end and a transmit end of a MAC frame.

In 802.11ax, a multi-user uplink transmission mechanism is introduced, to further improve channel sounding efficiency. To be specific, an AP may indicate a plurality of STAs to simultaneously upload a beamforming report.

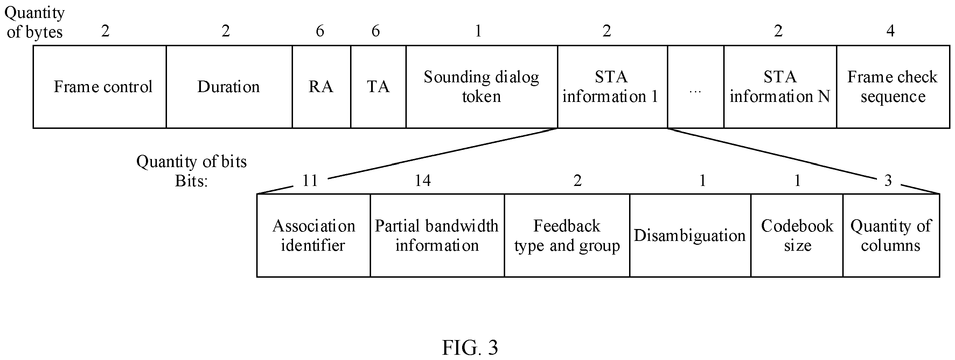

Specifically, in 802.11ax, an NDPA frame is a high efficiency (High Efficiency, HE) NDPA frame, and a type and a subtype of an FC field in the high efficiency NDPA frame are inherited from a VHT NDPA frame. Whether the frame is a VHT NDPA frame or an HE NDPA frame is distinguished by using a reserved bit in a sounding dialog token field. In addition, a length of a STA information field in the HE NDPA frame is extended to 4 bytes, and partial bandwidth information (Partial BW Info) is introduced to indicate a STA to feed back channel state information of a partial bandwidth. A frame structure of the HE NDPA frame is shown in FIG. 3.

However, in both 802.11ac and 802.11ax, the channel sounding solutions are intended for a single AP and a plurality of STAs. Therefore, how to implement channel sounding between a plurality of APs becomes an urgent problem to be resolved.

SUNGJIN PARK (LG ELECTRONICS): "Multi-AP Transmission Procedure", IEEE DRAFT, XP068148191 describes feasible procedure needed to support multi-AP transmissions in EHT. WO 2018/093132 A1 describes a method for reporting channel information by a station in a wireless LAN system. ROSS JIAN YU (HUAWEI): "HE NDPAFrame Format", IEEE DRAFT, XP068119437 describes High Efficiency Null Data Packet Announcement Frame Format.

### SUMMARY

This application provides a channel sounding method and a communication apparatus, to implement a channel sounding procedure of a plurality of APs.

To achieve the foregoing objective, the following technical solutions are used in this application.

According to a first aspect, an embodiment of this application provides a channel sounding method. The method includes: A first AP sends an announcement frame, where the announcement frame is used to indicate at least one second AP and at least one station STA to participate in channel sounding; and the first AP then sequentially sends a channel sounding poll frame to each second AP in the at least one second AP, where the channel sounding poll frame is used to trigger the at least one second AP to send a channel sounding frame.

According to a second aspect, an embodiment of this application provides a channel sounding method. The method may include: A second access point AP receives an announcement frame sent by a first AP, where the announcement frame is used to indicate the second AP and at least one STA to participate in a channel sounding procedure; the second AP receives a channel sounding poll frame sent by the first AP, where the channel sounding poll frame is used to trigger the second AP to send a channel sounding frame; and the second AP sends the channel sounding frame.

In the foregoing manner, the first AP sends the channel sounding poll frame to trigger a designated second AP to send the channel sounding frame, so that when a second AP fails to send a channel sounding frame, an indication function of the channel sounding poll frame can be used to make another second AP to continue to complete sending of a channel sounding frame. Therefore, a problem of poor robustness caused by interruption of the channel sounding procedure is avoided, and resource utilization is improved.

In a possible implementation of the first aspect or the second aspect, the announcement frame and the channel sounding poll frame are null data packet announcement NDPA frames. The channel sounding poll frame includes control frame type information, where the control frame type information is used to indicate that the channel sounding poll frame is a type frame used to trigger the at least one second AP to send the channel sounding frame.

In the foregoing manner, NDPA is reused, and a structure of the NDPA frame may also be used for the channel sounding poll frame, to implement a function of the channel sounding poll frame.

In a possible implementation of the first aspect or the second aspect, the announcement frame includes first indication information, where the first indication information is used to indicate whether the first AP sends a channel sounding frame.

In the foregoing manner, in a channel sounding procedure, the first AP, which may be referred to as a primary AP, may not send a channel sounding frame, and the first AP may notify, by using the announcement frame, another AP and the STA that the first AP does not send a channel sounding frame in the channel sounding procedure.

In a possible implementation of the first aspect or the second aspect, the announcement frame includes at least one AP information field, a length of one AP information field is an integer multiple of 4 bytes, and the 28th bit in every 4 bytes in the AP information field is set to 1. The at least one AP information field is in a one-to-one correspondence with each second AP in the at least one second AP, and each AP information field includes identification information of a corresponding second AP. In the foregoing manner, misreading by a VHT STA is avoided.

In a possible implementation of the first aspect or the second aspect, the identification information of the second AP is an identifier of the second AP or an identifier of a STA in a device in which the second AP is located. The identifier of the second AP is determined through negotiation between the first AP and the second AP in advance. In the foregoing manner, the first AP may indicate, by using the announcement frame including identification information of a second AP, the corresponding second AP to participate in coordinated transmission, and the identification information carried in the announcement frame may be one of the foregoing.

In a possible implementation of the first aspect or the second aspect, the first 11 bits in every four bytes in the AP information field are set to a special value, and are used to indicate that media access control MAC address information of the second AP is carried in the AP information field, and the identification information of the second AP is a MAC address of the second AP. In the foregoing manner, misreading by an HE STA is avoided.

In a possible implementation of the first aspect or the second aspect, the AP information field further includes one or more of the following: a sending order indication and a training sequence quantity indication, where the sending order indication is used to indicate an order for the second AP corresponding to the AP information field to send the channel sounding frame, and the training sequence quantity indication is used to indicate a quantity of training sequences included in the channel sounding frame sent by the second AP corresponding to the AP information field. In the foregoing manner, the first AP may further indicate, by using the announcement frame, an order for the second AP to send the channel sounding frame. In addition, the announcement frame may be further used to indicate information included in the channel sounding frame sent by the second AP.

In a possible implementation of the first aspect or the second aspect, the announcement frame further includes a common information field, and a length of the common information field is an integer multiple of 4 bytes, where the first 11 bits in every four bytes in the common information field are set to a special value, and the 28th bit in every four bytes in the common information field is set to 1. In the foregoing manner, misreading by a VHT STA is avoided.

In a possible implementation of the first aspect or the second aspect, the common information field includes second indication information, where the second indication information is used to indicate a quantity of at least one second AP, or used to indicate a total quantity of the at least one second AP and the first AP. In the foregoing manner, the first AP may notify, by using the announcement frame, the STA of the quantity of APs on which sounding needs to be performed in the channel sounding procedure, so that the STA can pre-estimate channel sounding duration.

In a possible implementation of the first aspect or the second aspect, the announcement frame or the channel sounding poll frame includes resource indication information, where the resource indication information is used to indicate the at least one second AP to send the channel sounding frame on a specified channel resource. In the foregoing manner, channel sounding frames of a plurality of APs are sent simultaneously. Therefore, channel sounding efficiency is further improved.

According to a third aspect, an embodiment of this application provides a communication apparatus applied to a first AP side. The apparatus may include a sending module. The module may be configured to send an announcement frame, where the announcement frame is used to indicate at least one second AP and at least one STA to participate in a channel sounding procedure. The sending module is further configured to sequentially send a channel sounding poll frame to each second AP in the at least one second AP, where the channel sounding poll frame is used to trigger the at least one second AP to send a channel sounding frame.

According to a fourth aspect, an embodiment of this application provides a communication apparatus applied to a second AP side. The apparatus may include a receiving module and a sending module. The receiving module may be configured to receive an announcement frame sent by a first AP, where the announcement frame is used to indicate the second AP and at least one STA to participate in a channel sounding procedure. The receiving module may be further configured to receive a channel sounding poll frame sent by the first AP, where the channel sounding poll frame is used to trigger the second AP to send a channel sounding frame. The sending module may be configured to send the channel sounding frame.

In a possible implementation of the third aspect or the fourth aspect, the announcement frame and the channel sounding poll frame are null data packet announcement NDPA frames. The channel sounding poll frame includes control frame type information, where the control frame type information is used to indicate that the channel sounding poll frame is a type frame used to trigger the at least one second AP to send the channel sounding frame.

In a possible implementation of the third aspect or the fourth aspect, the announcement frame includes first indication information, where the first indication information is used to indicate whether the first AP sends a channel sounding frame.

In a possible implementation of the third aspect or the fourth aspect, the announcement frame includes at least one AP information field, a length of one AP information field is an integer multiple of 4 bytes, and the 28th bit in every 4 bytes in the AP information field is set to 1. The at least one AP information field is in a one-to-one correspondence with each second AP in the at least one second AP, and each AP information field includes identification information of a corresponding second AP.

In a possible implementation of the third aspect or the fourth aspect, the identification information of the second AP is an identifier of the second AP or an identifier of a STA in a device in which the second AP is located. The identifier of the second AP is determined through negotiation between the first AP and the second AP in advance.

In a possible implementation of the third aspect or the fourth aspect, the first 11 bits in every four bytes in the AP information field are set to a special value, and are used to indicate that media access control MAC address information of the second AP is carried in the AP information field, and the identification information of the second AP is a MAC address of the second AP.

In a possible implementation of the third aspect or the fourth aspect, the AP information field further includes one or more of the following: a sending order indication and a training sequence quantity indication, where the sending order indication is used to indicate an order for the second AP corresponding to the AP information field to send the channel sounding frame, and the training sequence quantity indication is used to indicate a quantity of training sequences included in the channel sounding frame sent by the second AP corresponding to the AP information field.

In a possible implementation of the third aspect or the fourth aspect, the announcement frame further includes a common information field, and a length of the common information field is an integer multiple of 4 bytes, where the first 11 bits in every four bytes in the common information field are set to a special value, and the 28th bit in every four bytes in the common information field is set to 1.

In a possible implementation of the third aspect or the fourth aspect, the common information field includes second indication information, where the second indication information is used to indicate a quantity of at least one second AP, or used to indicate a total quantity of the at least one second AP and the first AP.

In a possible implementation of the third aspect or the fourth aspect, the announcement frame or the channel sounding poll frame includes resource indication information, where the resource indication information is used to indicate the at least one second AP to send the channel sounding frame on a specified channel resource.

According to a fifth aspect, an embodiment of this application provides a communication apparatus on a first access point side. The apparatus may be a first access point device or a chip in a first access point. The apparatus has a function of implementing the first access point in the first aspect. The function may be implemented by using hardware, or may be implemented by hardware executing corresponding software. The hardware or the software includes one or more units corresponding to the foregoing function.

In a possible implementation, when the apparatus is the first access point, the first access point includes a processor and a transceiver. The processor is configured to support the first access point AP in performing corresponding functions in each of the foregoing aspects. The transceiver is configured to: support communication between the first access point AP and a second access point AP, and send information or instructions used in the foregoing methods to the second access point. Optionally, the first access point may further include a memory. The memory is configured to be coupled to the processor, and the memory stores program instructions and data for the first access point.

In a possible implementation, the apparatus includes: a processor, a baseband circuit, a radio frequency circuit, and an antenna. The processor is configured to control functions of each circuit part. The baseband circuit is configured to generate various signaling and messages, such as an announcement frame and a channel sounding poll frame; and send, to a second access point AP through the antenna, signaling and messages resulting from processing of the radio frequency circuit, such as analog conversion, filtering, amplification, and up-conversion. Optionally, the apparatus may further include a memory, where the memory stores necessary program instructions and data for the first access point.

In a possible implementation, the apparatus may include a processor and a modem, where the processor may be configured to execute instructions or run an operating system, to control a function of the first access point; and the modem may perform encapsulation, encoding/decoding, modulation/demodulation, equalization, and the like on data based on a protocol to generate signaling information (such as an announcement frame and a channel sounding poll frame), to support the first access point AP in performing corresponding functions in the first aspect.

In a possible implementation, when the apparatus is a chip in the first access point, the chip includes a processing module and a transceiver module. The processing module may be, for example, a processor. For example, the processor is configured to generate various types of messages and signaling, encapsulate the various types of messages based on a protocol, and then perform processing such as encoding, modulation, and amplification on the various types of messages; and the processor may be further configured to perform demodulation, decoding, and decapsulation to obtain signaling and messages. The transceiver module may be, for example, an input/output interface, a pin, or a circuit on the chip. The processing module may execute computer-executable instructions stored in a storage unit, to support the first access point AP in performing corresponding functions in the foregoing aspects. Optionally, the storage unit may be a storage unit on the chip, such as a register or a cache; or the storage unit may be a storage unit located outside the chip in the first access point, such as a read-only memory (read-only memory, ROM), another type of static storage device capable of storing static information and instructions, or a random access memory (random access memory, RAM).

In a possible implementation, the apparatus includes a processor, where the processor is configured to couple to a memory, read instructions in the memory, and perform, based on the instructions, the method of the first access point AP used in the first aspect. The memory may be located inside the processor, or may be located outside the processor.

The processor mentioned anywhere above may be a general-purpose central processing unit (Central Processing Unit, CPU for short), a microprocessor, an application-specific integrated circuit (application-specific integrated circuit, ASIC for short), or one or more integrated circuits configured to control program execution of the spatial multiplexing methods in the foregoing aspects.

According to a sixth aspect, this application provides a communication apparatus on a second access point side, where the apparatus may be a second access point or a chip in a second device. The apparatus has a function of implementing the second access point in the second aspect. The function may be implemented by using hardware, or may be implemented by hardware executing corresponding software. The hardware or the software includes one or more units corresponding to the foregoing function.

In a possible implementation, when the apparatus is a second access point, the second access point includes a processor and a transceiver. The processor is configured to support the second access point AP in performing a corresponding function in the foregoing methods. The transceiver is configured to support communication between the second access point AP and a second access point AP or a station, and receive information or instructions sent by the first access point in the foregoing methods, for example, an announcement frame or a channel sounding poll frame. Optionally, the second access point may further include a memory. The memory is configured to be coupled to the processor, and the memory stores program instructions and data for the second access point.

In a possible implementation, the apparatus includes: a processor, a baseband circuit, a radio frequency circuit, and an antenna. The processor is configured to implement control on some functions of each circuit. The radio frequency circuit may perform processing such as digital conversion, filtering, amplification, and down-conversion on a data packet sent by the first access point and received by using the antenna, and then obtain signaling information after decoding and protocol-based decapsulation performed by using the baseband circuit. Optionally, the apparatus further includes a memory, where the memory stores necessary program instructions and data for the second access point.

In a possible implementation, the apparatus includes a processor and a modem, where the processor may be configured to execute instructions or run an operating system, to control a function of the second access point; and the modem may perform encapsulation, encoding/decoding, modulation/demodulation, equalization, and the like on data based on a protocol to generate a channel sounding frame, or to parse an announcement frame, a channel sounding poll frame and the like, to support the second access point AP in performing corresponding functions in the second aspect.

In a possible implementation, when the apparatus is a chip in the second access point, the chip includes a processing module and a transceiver module. The processing module may be, for example, a processor, and the processor may be configured to perform processing such as filtering, demodulation, power amplification, and decoding on a data packet that is received by the transceiver module and that carries signaling or data information (for example, a data packet including a scheduling request message). The transceiver module may be, for example, an input/output interface, a pin, or a circuit on the chip. The processing module may execute computer-executable instructions stored in a storage unit, to support the second access point AP in performing corresponding functions in the fourth aspect. Optionally, the storage unit may be a storage unit on the chip, such as a register or a cache; or the storage unit may be a storage unit located outside the chip in the second access point, such as a read-only memory (read-only memory, ROM), another type of static storage device capable of storing static information and instructions, or a random access memory (random access memory, RAM).

In a possible implementation, the apparatus includes a processor, where the processor is configured to couple to a memory, read instructions in the memory, and perform, based on the instructions, the method in the second aspect. The memory may be located inside the processor, or may be located outside the processor.

The processor mentioned anywhere above may be a general-purpose central processing unit (Central Processing Unit, CPU for short), a microprocessor, an application-specific integrated circuit (application-specific integrated circuit, ASIC for short), or one or more integrated circuits configured to control program execution of the spatial multiplexing methods in the foregoing aspects.

According to a seventh aspect, this application provides a computer-readable storage medium, where the computer-readable storage medium stores instructions, and the instructions can be executed by one or more processors on a processing circuit. When the instructions are run on a computer, the computer is enabled to perform the method in any one of the foregoing first aspect and the second aspect and any possible implementation thereof.

According to an eighth aspect, a computer program product including instructions is provided. When the computer program product runs on a computer, the computer is enabled to perform the method in any one of the first aspect and the second aspect and any possible implementation thereof.

According to a ninth aspect, this application provides a chip system, where the chip system includes a processor, configured to support a data sending device in performing functions used in the foregoing aspect, such as generating or processing data and/or information used in the foregoing aspects. In a possible design, the chip system further includes a memory. The memory is configured to store program instructions and data for a data sending device. The chip system may include a chip, or may include a chip and another discrete device.

According to a tenth aspect, an embodiment of this application provides a wireless communication system, where the system includes the first access point and the at least one second access point used in the foregoing aspects.

### BRIEF DESCRIPTION OF DRAWINGS

FIG. 1 is a schematic diagram of an example of a channel sounding procedure;
FIG. 2 is a schematic diagram of a structure of an example of a VHT NDPA frame;
FIG. 3 is a schematic diagram of a structure of an example of an HE NDPA frame;
FIG. 4 is a schematic diagram of an application scenario according to an embodiment of this application;
FIG. 5 is a schematic flowchart of a channel sounding method according to an embodiment of this application;
FIG. 6 is a schematic diagram of a structure of an NDPA frame according to an embodiment of this application;
FIG. 7 is a schematic diagram of a structure of an NDPA frame according to an embodiment of this application;
FIG. 8 is a schematic diagram of a structure of an NDPA frame according to an embodiment of this application;
FIG. 9 is a schematic diagram of a structure of an NDPA frame according to an embodiment of this application;
FIG. 10 is a schematic diagram of a structure of an NDPA frame according to an embodiment of this application;
FIG. 11 is a schematic diagram of a structure of an NDPA frame according to an embodiment of this application;
FIG. 12 is a schematic diagram of a structure of an NDPA frame according to an embodiment of this application;
FIG. 13 is a schematic diagram of a structure of an NDP poll frame according to an embodiment of this application;
FIG. 14 is a schematic diagram of a structure of an NDP poll frame according to an embodiment of this application;
FIG. 15 is a schematic flowchart of a channel sounding method according to an embodiment of this application;
FIG. 16 is a schematic diagram of a structure of an NDPA frame according to an embodiment of this application;
FIG. 17 is a schematic flowchart of a channel sounding method according to an embodiment of this application;
FIG. 18 is a schematic diagram of a structure of an apparatus according to an embodiment of this application;
FIG. 19 is a schematic block diagram of an apparatus according to an embodiment of this application;
FIG. 20 is a schematic diagram of a structure of an apparatus according to an embodiment of this application; and
FIG. 21 is a schematic block diagram of an apparatus according to an embodiment of this application.

### DESCRIPTION OF EMBODIMENTS

The following clearly describes technical solutions in embodiments of this application with reference to accompanying drawings in the embodiments of this application.

The term "and/or" in this specification describes only an association relationship for describing associated objects and represents that there may be three relationships. For example, A and/or B may represent the following three cases: Only A exists, both A and B exist, and only B exists.

In the specification and claims in the embodiments of this application, terms "first", "second", and so on are intended to distinguish between different objects but do not indicate a particular order of the objects. For example, a first target object, a second target object, and the like are used to distinguish between different target objects, rather than describe a specific order of the target objects.

In embodiments of this application, words such as "example" and "for example" are used to represent giving an example, an illustration, or a description. Any embodiment or design scheme described as an "example" or "for example" in the embodiments of this application shall not be explained as being more preferred or having more advantages than another embodiment or design scheme. Specifically, use of the word "example", "for example", or the like is intended to present a related concept in a specific manner.

In descriptions of the embodiments of this application, unless otherwise stated, "a plurality of" means at least two. For example, a plurality of processing units are two or more processing units. A plurality of systems are two or more systems.

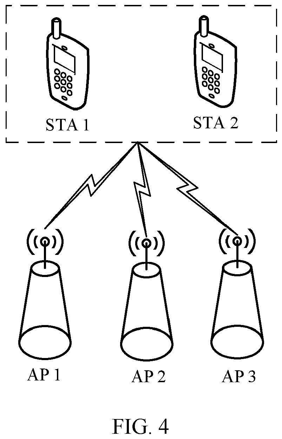

Before the technical solutions in the embodiments of this application are described, an application scenario of the embodiments of this application is first described with reference to the accompanying drawings. FIG. 4 is a schematic diagram of an application scenario according to an embodiment of this application. The application scenario includes AP 1, AP 2, and AP 3, and further includes STA 1 and STA 2. In a specific implementation process of the embodiments of this application, a STA is a communication apparatus with a wireless sending/receiving function, for example, may communicate with another network element according to the 802.11 protocol. The STA may also be referred to as a user terminal, a user apparatus, an access apparatus, a subscriber station, a subscriber unit, a mobile station, a user agent, user equipment, or another name, and for example, may be a device such as a computer, a smartphone, or a tablet computer. An AP is a communication apparatus that can provide a service for the STA and that has a wireless sending/receiving function, and for example, may communicate, according to the 802.11 protocol, with another network element, for example, an access point, a router, a switch, a micro base station, or a small cell in a WLAN communication system. It should be noted that during actual application, there are two or more APs, and there may be one or more STAs. A quantity of STAs and a quantity of APs in the application scenario shown in FIG. 4 are only examples. This is not limited in this application.

With reference to the schematic diagram of the application scenario shown in FIG. 4, the following describes a specific implementation solution of this application. In the following scenario, an example in which AP 1 is a first AP in this embodiment of this application, and AP 2 and AP 3 are second APs in this embodiment of this application is used for detailed description. It should be noted that, in the embodiments of this application, the first AP may be any AP in FIG. 4, and the second AP may be any AP other than the first AP in FIG. 4.

Specifically, in this application, a scenario in which the first AP indicates, by sending a channel sounding poll frame, a corresponding second AP to send a channel sounding frame is denoted as a scenario 1. A scenario in which the first AP indicates, by sending a channel sounding poll frame, two or more second APs to simultaneously send channel sounding frames is denoted as a scenario 2. A scenario in which the first AP indicates, by sending an announcement frame, the second AP to send a channel sounding frame is denoted as a scenario 3.

### Scenario 1

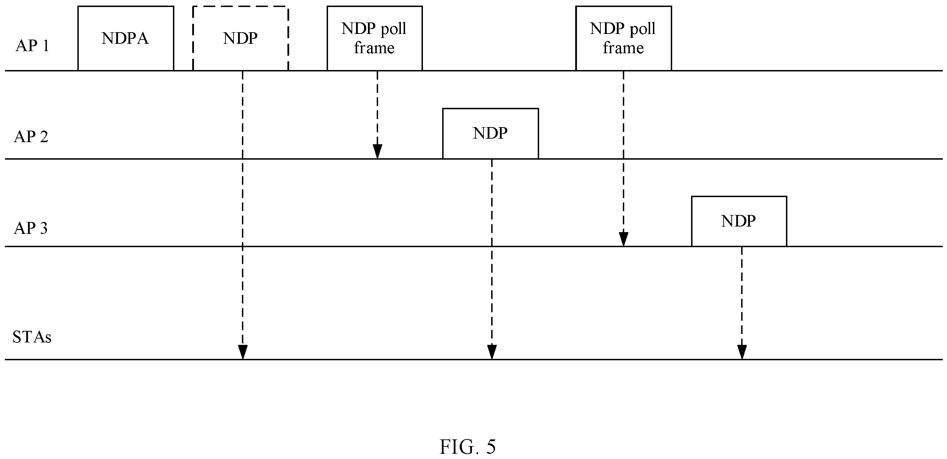

With reference to FIG. 4, FIG. 5 is a schematic flowchart of a channel sounding method according to an embodiment of this application. In FIG. 5, the method includes the following steps.

Step 101: A first AP sends an announcement frame, where the announcement frame is used to indicate at least one second AP and at least one STA to participate in a channel sounding procedure.

Specifically, in this application, for ease of description, AP 1 is used as the first AP, in other words, a primary AP, and AP 2 and/or AP 3 are used as second APs. AP 1 generates the announcement frame and sends the announcement frame. The announcement frame includes identification information of the at least one second AP and identification information of the at least one STA. Correspondingly, an AP or a STA that receives the announcement frame may determine, based on the identification information, whether to be scheduled to participate in the channel sounding procedure.

Optionally, the announcement frame may be an NDPA frame. Further, the announcement frame may be a VHT NDPA frame, an HE NDPA frame, or an extremely high-throughput null data packet announcement (Extremely High Throughput Null Data Packet Announcement, EHT NDPA) frame (where a structure of this frame is described in the following embodiments).

With reference to FIG. 5, for example, AP 1 sends the announcement frame (an NDPA frame). The NDPA frame may include identification information of AP 2 and AP 3, and identification information of STA 1 and STA 2. AP 2, AP 3, STA 1, and STA 2 may determine, based on the identification information, to be scheduled to participate in the channel sounding procedure.

Step 102: The first AP sequentially sends a channel sounding poll frame to each second AP in the at least one second AP, where the channel sounding poll frame is used to trigger the at least one second AP to send a channel sounding frame.

Specifically, in this application, the first AP may send the channel sounding poll frame to a target second AP, and the channel sounding poll frame is used to trigger the target second AP to send the channel sounding frame. Optionally, the channel sounding frame is a null data packet (Null Data Packet, NDP) frame. The channel sounding poll frame may be referred to as an NDP poll (NDP poll) frame or an NDP trigger frame, and certainly may have another name. This is not limited in this application.

Optionally, the channel sounding poll frame carries identification information of the target second AP (which may alternatively be referred to as a triggered second AP). In an example, the identification information of the second AP is a MAC address of the target second AP, and may be carried in a receiver address (receiver address, RA) field of the channel sounding poll frame. Correspondingly, an AP that receives the channel sounding poll frame may determine, based on the identification information, whether to send the channel sounding frame. It should be noted that the target second AP may be any AP in the at least one second AP.

Optionally, the NDP poll frame includes control frame type information, where the control frame type information is used to indicate a frame type of the NDP poll frame, that is, to indicate that the frame is an NDP poll frame.

Step 103: The triggered second AP sends the channel sounding frame.

Specifically, an AP whose identification information is successfully matched the identification information included in the NDP poll frame is determined as the triggered AP. Then, the triggered AP sends the channel sounding frame (an NDP frame).

Refer to FIG. 5. For example, AP 1 sends the NDP poll frame to AP 2, where the frame includes the identification information of AP 2. After identifying that the NDP poll frame includes the identification information of AP 2, AP 2 sends the NDP frame. AP 1 sends an NDP poll frame to AP 3, where the frame includes the identification information of AP 3. After identifying that the NDP poll frame includes the identification information of AP 3, AP 3 sends the NDP frame. Optionally, each AP sends an NDP frame in a broadcast manner.

Optionally, in this application, when sending the NDP poll frame, the first AP may send the NDP poll frame to each second AP in a predetermined order. For example, AP 1 may store an AP list, and AP 1 may send NDP poll frames to APs in the list sequentially. Optionally, the predetermined order may be set based on an actual requirement. For example, an order for sending the NDP poll frames may be set based on a distance between second APs and the first AP. This is not limited in this application.

Optionally, after monitoring the NDP frame of the triggered second AP, the first AP sends an NDP poll frame to another second AP. For example, after monitoring the NDP frame broadcast by AP 2, AP 1 sends the NDP poll frame carrying the identification information of AP 3, to trigger AP 3 to send the NDP frame.

Optionally, if no NDP frame of the triggered second AP is monitored within predetermined duration, the first AP may send an NDP poll frame to another second AP. Alternatively, the first AP may resend an NDP poll frame to the triggered second AP. Optionally, the predetermined duration may be point coordination function interframe space (Point Coordination Function Interframe Space, PIFS), or may be set based on an actual requirement. This is not limited in this application. With reference to FIG. 4, for example, after sending the NDP poll frame to AP 2, if within predetermined duration, AP 1 does not monitor any NDP frame broadcast by AP 2, AP 1 may send the NDP poll frame to AP 2 again, and may repeat the sending for a plurality of times. Optionally, a repetition upper limit may be set. For example, after AP 1 repeatedly sends the NDP poll frame to AP 2 for three times, and still does not monitor any NDP frame of AP 2, AP 1 sends an NDP poll frame to another second AP.

Optionally, after receiving the NDP poll frame, the second AP may send the NDP frame after predetermined duration. Optionally, the predetermined duration may be SIFS, or may be set based on an actual requirement. This is not limited in this application.

Step 104: The at least one STA performs channel sounding based on the NDP frame.

Optionally, the at least one STA performs channel sounding on a downlink channel of the second AP based on the NDP frame sent by the second AP, and obtains CSI. Then, a feedback procedure is entered. The STA feeds back the CSI to the AP. For a specific feedback procedure, refer to the conventional technology. Details are not described in this application.

Optionally, in this application, the announcement frame may include first indication information, where the first indication information is used to indicate whether the first AP sends an NDP frame. Optionally, the announcement frame further includes second indication information, where the second indication information is used to indicate a quantity of second APs that participate in channel sounding, or used to indicate a total quantity of the first AP and the second APs that participate in channel sounding. Specifically, in this application, if the first AP sends the NDP frame, optionally, the announcement frame may include the first indication information, and the at least one second AP and/or the at least one STA may determine, by reading the first indication information, that the first AP sends the NDP frame. Correspondingly, in step 102, after sending the NDPA frame, the first AP may send the NDP frame after an interval of predetermined duration. The predetermined duration may be SIFS. This is not limited in this application. Optionally, the announcement frame may further include second indication information, and the at least one STA may estimate duration of a channel sounding procedure based on the quantity of second APs that send the NDP frames.

Optionally, in this application, as described above, the announcement frame may be an EHT NDPA frame, the EHT NDPA frame may include a common information field, and the indication information may be carried in the common information field.

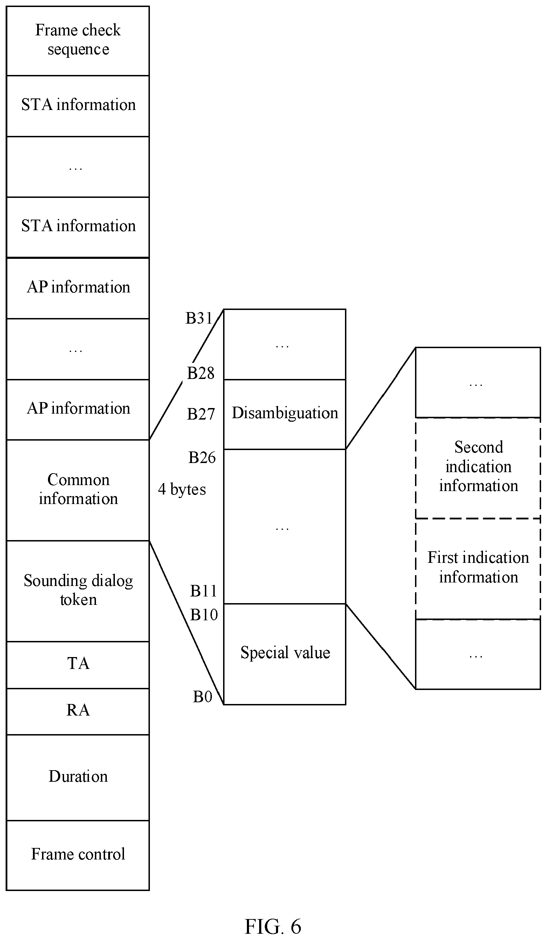

Optionally, a length of the common information field of the EHT NDPA frame may be an integer multiple of 4 bytes, for example, 4J bytes (bytes), and J is an integer greater than or equal to 1. In this application, the first 11 bits in every four bytes in the common information field are set to a special value. For example, if bits included in the common information field are denoted as B0 to B32*J-1, bits B32(J-1) to B32(J-1)+10 in the common information field are set to a special value. Misreading by an HE STA is avoided by using this setting. A reason is as follows: For the HE STA, by default, a length of each STA information field in an NDPA frame is 4 bytes. In other words, when the HE STA reads a STA information field, the first 11 bits (bits) (hereinafter referred to as an association identifier (Association Identifier, AID) field) of the STA information field are read first. If information in the AID field does not match an AID of the HE STA, the HE STA continues to read a next STA information field. If information in the AID field matches an AID of the HE STA, the HE STA obtains information in the STA information field. In this application, the first 11 bits in every four bytes in the common information field are set to a special value. In this case, when reading the NDPA frame, the HE STA may determine that a field is not an AID field by reading the first 11 bits in every four bytes, and does not perform any processing on the four bytes. Therefore, misreading is avoided. For example, FIG. 6 is a schematic diagram of a frame structure of an EHT NDPA frame. In FIG. 6, optionally, a length of a common information field of the EHT NDPA frame is 4 bytes, that is, a value of J is 1. Optionally, B32(J-1) to B32(J-1)+10 in the common information field, that is, B0 to B10 are set to a special value. Therefore, when reading the first 11 bits in the common information field, a VHT STA identifies that a value of the first 11 bits is not within an AID value range (the AID value range is from 1 to 2007). In this case, the VHT STA considers that the field is not an AID field, and does not perform any processing on the four bytes to which the field belongs. Therefore, misreading by the VHT STA is avoided. Optionally, the special value may be a dummy identifier (Dummy ID), or may be any value selected from a range [2007, 2047]. This is not limited in this application.

Optionally, a value of the 28th bit in every four bytes in the common information field is set to 1. For example, if bits included in the common information field are denoted as B0 to B32*J-1, a bit B32(J-1)+27 in the common information field is set to 1. Misreading by the VHT STA can be avoided by using this setting. The reason is as follows: For the VHT STA, by default, a length of each STA information field in an NDPA frame is 2 bytes. Therefore, the VHT STA may parse B32(J-1)+16 to B32(J-1)+27 in the common information field into an AID field. (The reason is similar to that of the HE STA, and details are not described herein.) Optionally, a most significant bit in B32(J-1)+16 to B32(J-1)+27 in the common information field, namely, B32(J-1)+27 (which may alternatively be referred to as a disambiguation bit) may be set to 1, to prevent B32(J-1)+16 to B32(J-1)+27 from being the same as an AID of a VHT STA. Therefore, misreading by the VHT STA is avoided. Still refer to FIG. 6. For example, the length of the common information field is 4 bytes (J is 1). In this case, a bit B27 of the common information field is set to 1. Therefore, misreading by the VHT STA is avoided.

Optionally, the announcement frame includes identification information of the at least one second AP, and is used to indicate the at least one second AP to participate in channel sounding. If the announcement frame is an EHT NDPA frame, optionally, the EHT NDPA frame may include at least one AP information field, and each AP information field may include the identification information of the second AP, where the identification information is used to indicate the corresponding second AP to participate in channel sounding. Correspondingly, a second AP that receives the EHT NDPA frame may determine, by identifying the identification information in the AP information field, whether to be scheduled to participate in channel sounding. Optionally, the identification information of the AP included in the AP information field may include but is not limited to the following three types.

Type 1: Pre-negotiated identification information. In an example, the first AP may allocate the identification information to the second AP. In another example, the second AP determines the identification information of the second AP and notifies another AP of the identification information.

Type 2: A media access control (Media Access Control, MAC) address or partial MAC address of the second AP.

Type 3: Identification information of a STA in a device to which the second AP belongs.

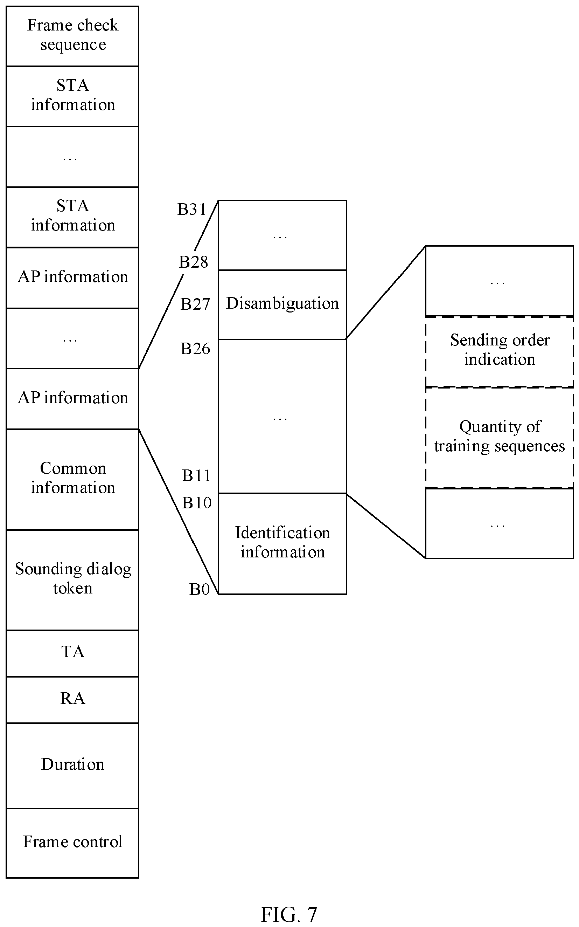

The following separately describes identification information of each type. For the identification information of the type 1, the second AP may obtain the identification information by negotiating with the first AP in advance. A negotiation process may be: The first AP allocates the identification information to the target second AP (where the target second AP may be any AP in the at least one second AP), and sends an indication frame to the second AP, where the indication frame carries the identification information allocated to the target second AP. It should be noted that, if another second AP can receive the indication frame, when allocating an AID to a STA associated with the another second AP, the another second AP should avoid using a value same as the identification information. Optionally, the indication frame may be a beacon frame. Optionally, further, the indication frame may be sent by the first AP to the target second AP after the first AP receives an identification information request frame sent by the target second AP. Optionally, the first AP may further allocate an AID range exclusive to each second AP, to ensure that AIDs of STAs associated with each second AP are different from each other. For example, AP 1 may allocate an AID range to AP 2 when allocating identification information to AP 2. Correspondingly, after obtaining the identification information of AP 2, AP 2 may select an AID for a STA associated with AP 2 from an AID range 1 allocated to AP 2. Correspondingly, AP 3 may select, from an AID range 2 allocated to AP 3, an AID for a STA associated with AP 3, where the AID range 1 and the AID range 2 do not overlap, so that the AID of the STA associated with AP 2 and the AID of the STA associated with AP 3 are different. Optionally, the second AP may carry request information in the identification information request frame sent to the first AP, to request a size of an AID range exclusive to the second AP. Correspondingly, the first AP may allocate an AID range to the second AP based on the request information of the second AP. FIG. 7 shows an EHT NDPA frame including at least one AP information field, where each AP information field includes identification information of a second AP, and the identification information of the second AP is carried in the first 11 bits in the AP information field.

For the identification information of the type 2, optionally, the first 11 bits in each AP information field may be set to a special value, to indicate that the identification information carried in the AP information field is a MAC address or a partial MAC address. Correspondingly, after reading that the first 11 bits in the AP information field are set to a special value, the second AP that receives the NDPA frame may determine that the AP information field carries a MAC address or a partial MAC address. Optionally, a manner of generating a partial MAC address may be: selecting a specified length (which may be set based on an actual requirement) of a MAC address as the partial MAC address. Optionally, a manner of generating a partial MAC address may alternatively be: performing a specified operation on a MAC address, to obtain corresponding address information with a shorter length than that of the MAC address. For example, a 16-bit cyclic redundancy check (Cyclic Redundancy Check, CRC) operation is performed on a MAC address of 48 bits, so that an operation result is a partial MAC address corresponding to the MAC address of 48 bits.

Optionally, in this application, a length of the AP information field may be an integer multiple of 4 bytes, for example, 4K bytes. The identification information carried in the AP information field may be set to MAC address information or partial MAC address information based on the length of the AP information field.

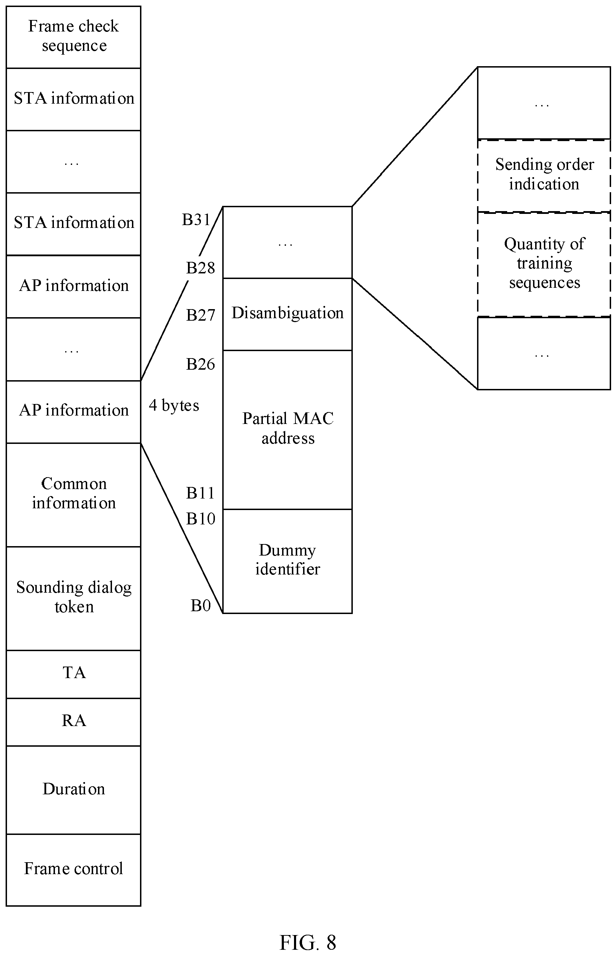

Optionally, for example, if K=1, in other words, the length of the AP information field is 4 bytes, the AP information field can carry only partial MAC address information (whose length is less than or equal to 16 bits). In addition, as described above, the first 11 bits (namely, B0 to B10) in the AP information field may be set to a special value. Correspondingly, the second AP reads the first 11 bits in the AP information field, and determines that the AP information field carries the MAC address or the partial MAC address, where the MAC address or the partial MAC address is to identify the corresponding second AP. Subsequently, the second AP may determine, based on whether the MAC address or the partial MAC address matches a MAC address of the second AP, whether to be scheduled to participate in channel sounding. FIG. 8 shows an EHT NDPA frame including at least one AP information field, where a length of each AP information field is 4 bytes, and includes partial MAC address information.

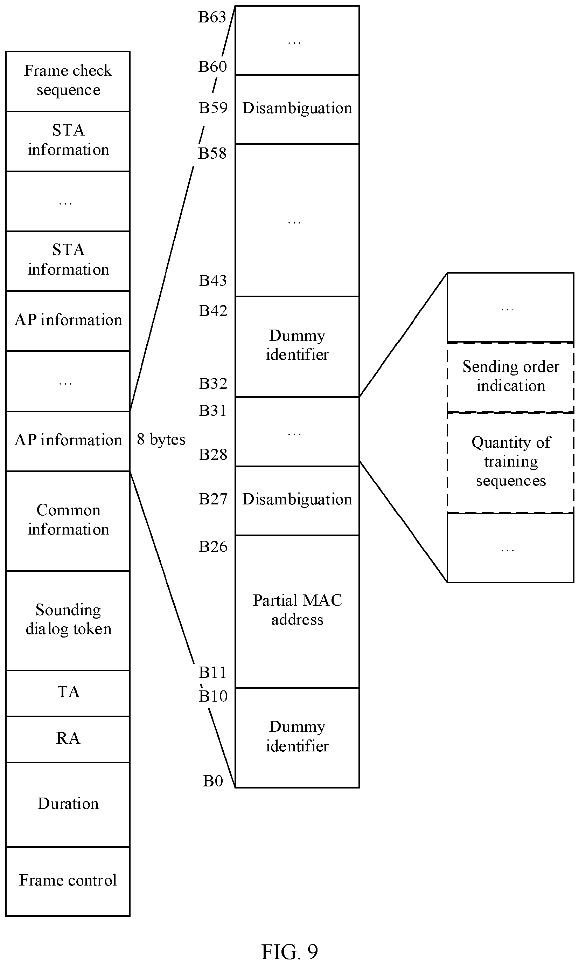

Optionally, for example, if K=2, in other words, the length of the AP information field is 8 bytes, the AP information field can still carry only partial MAC address information due to a length limitation. In addition, the first 11 bits (namely, B0 to B10) in the AP information field may be set to a special value. FIG. 9 shows an EHT NDPA frame including at least one AP information field, where a length of each AP information field is 8 bytes, and includes partial MAC address information.

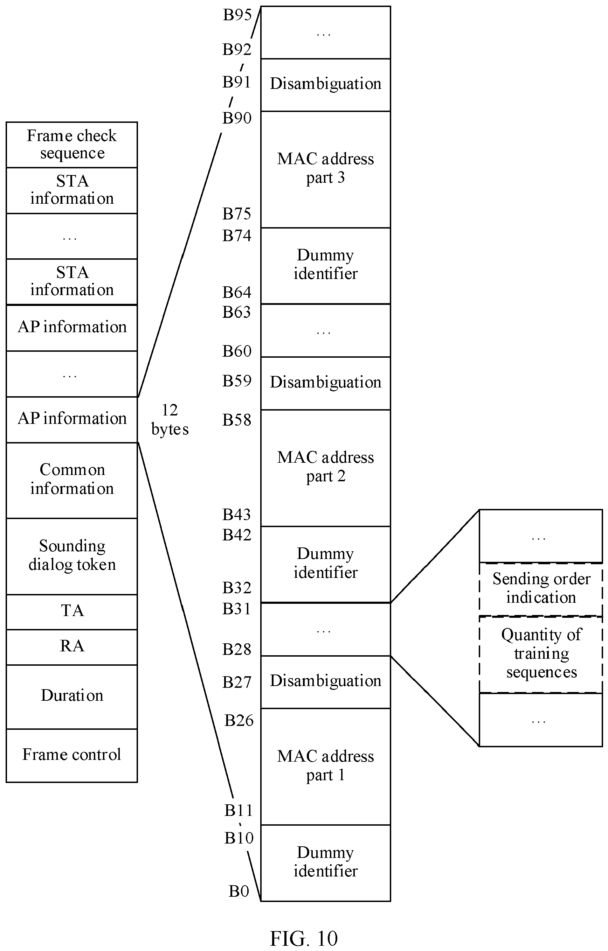

Optionally, for example, if K is greater than or equal to 3, in other words, the length of the AP information field is 12 bytes or longer, the AP information field may carry MAC address information or partial MAC address information. In addition, the first 11 bits (namely, B0 to B10) in the AP information field may be set to a special value. FIG. 10 shows an EHT NDPAframe including at least one AP information field, where a length of each AP information field is 12 bytes. The AP information field includes MAC address information, where the MAC address information is divided into three parts (parts), for example, a MAC address part 1, a MAC address part 2, and a MAC address part 3 in FIG. 10, and each of the parts has a length of 16 bits.

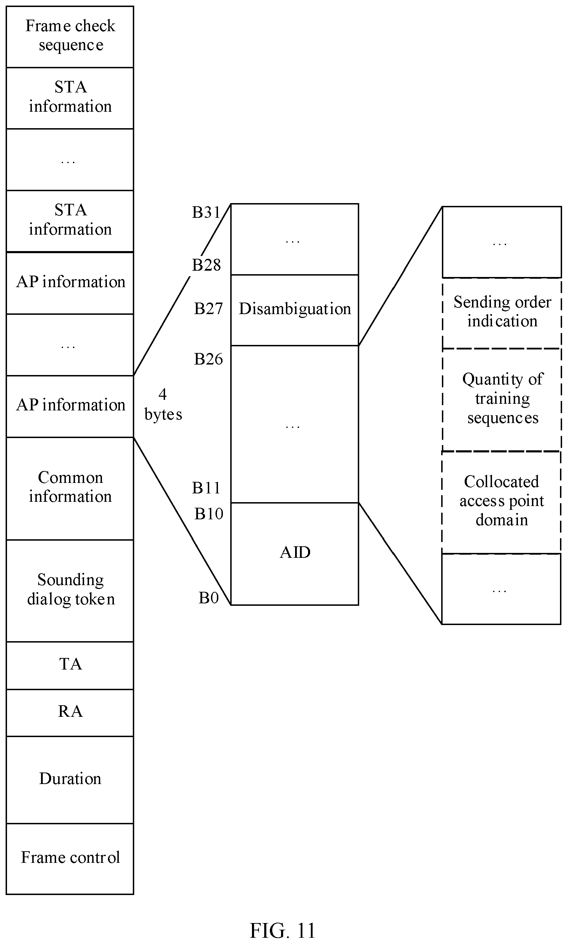

For the identification information of the type 3, optionally, the identification information may be an AID of a STA in a device to which the second AP belongs. The STA is associated with the first AP. Optionally, the AID of the STA in the device to which the second AP belongs may be carried in the first 11 bits in the AP information field. Optionally, the AP information field further carries collocated (collocated) AP information, where the collocated AP information is used to indicate whether the NDPA frame is sent to the second AP or sent to the STA in the device to which the second AP belongs. Correspondingly, when reading that the AP information field carries the AID of the STA in the device to which the second AP belongs and the collocated AP information, the second AP that receives the NDPA frame determines to be scheduled to participate in channel sounding. FIG. 11 shows an EHT NDPA frame that includes at least one AP information field. The first 11 bits in the AP information field carry an AID of a STA in a device to which a second AP belongs, and the AP information field further includes collocated AP information.

Optionally, as shown in FIG. 7, FIG. 8, FIG. 9, FIG. 10, and FIG. 11, the 28th bit in every four bytes in each AP information field is a disambiguation bit. For example, if bits included in the AP information field are denoted as B0 to B32*K-1, B32(K-1)+27 is set to 1, to avoid misreading by the VHT STA (for a specific reason, refer to the common information field, and details are not described herein). For example, in FIG. 7, a length of the AP information field is 4 bytes, including B0 to B31, and B27 is set to 1. In FIG. 8, a length of the AP information field is 4 bytes, including B0 to B31, and B27 is set to 1. In FIG. 9, a length of the AP information field is 8 bytes, including B0 to B63, and B27 and B59 are set to 1. In FIG. 10, a length of the AP information field is 12 bytes, including B0 to B95, and B27, B59, and B91 are set to 1. In FIG. 11, a length of the AP information field is 4 bytes, including B0 to B31, and B27 is set to 1. Optionally, in FIG. 8 to FIG. 10, the first 11 bits that are in every four bytes and that are set to a special value may also be referred to as a dummy identifier (dummy identity).

Optionally, each AP information field may further include but is not limited to one or more of the following: a training sequence quantity indication or information such as a channel sounding frame sending order indication. The training sequence quantity indication is used to indicate a quantity of training sequences included in a channel sounding frame sent by a second AP corresponding to the AP information field. Optionally, the training sequence may be a long training sequence (long training sequence, LTF). The channel sounding frame sending order indication is used to indicate an order for the second AP corresponding to the AP information field to send the channel sounding frame.

It should be noted that the foregoing information such as the MAC address information, the collocated AP information, the quantity of training sequences, and the sending order indication may be located at any location of the AP information field except the AID field (where a definition of the field is given above) and a disambiguation bit. This is not limited in this application.

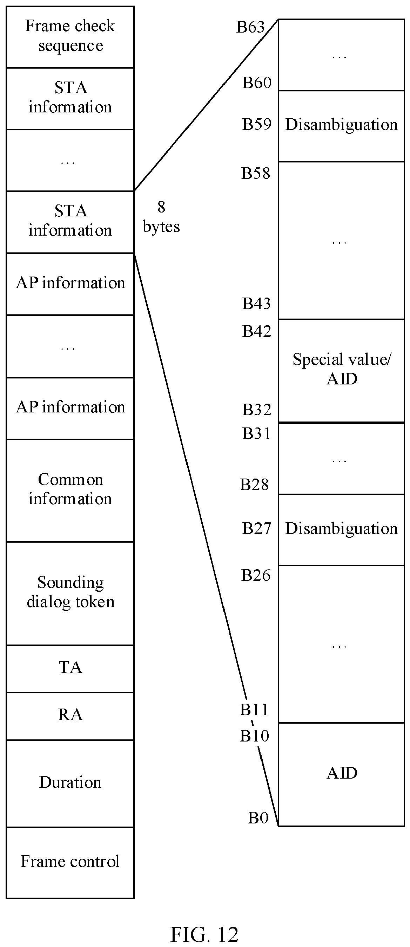

Optionally, in this application, the EHT NDPA frame may further include at least one STA information field. Optionally, the STA information field carries identification information of a STA, where the identification information of the STA is used to indicate the STA to participate in channel sounding. Optionally, a length of the STA information field is an integer multiple of 4 bytes, for example, 4L bytes, where L is an integer greater than or equal to 1. If L= 1, and the length of the STA information field is 4 bytes, the STA information field complies with a definition of a STA information field in the 802.11ax standard. In the 802.11ax standard, each bit in the STA information field is occupied. In a next-generation standard, the STA information field may be extended to 8 bytes or more, in other words, L may be an integer greater than or equal to 2. Optionally, the first 11 bits in any four bytes in the second four bytes and after the second four bytes in the STA information field are set to special values. For example, bits B32(L-1) to B32(L-1)+10 in the STA information field are set to a special value. Alternatively, the first 11 bits in any four bytes in the second four bytes and after the second four bytes in the STA information field may be set to a value that is the same as the AID field (namely, the first 11 bits in the STA information field), to avoid misreading by the HE STA. Optionally, a value of the 28th bit in every four bytes in the STA information field is set to 1. For example, B32(L-1)+27 in the STA information field is set to 1, to avoid misreading by the VHT STA. For example, as shown in FIG. 12, a length of the STA information field is 8 bytes, the first 11 bits (AID field) are set to identification information (for example, AID) of the STA, and B27 (disambiguation bit) and B59 (disambiguation bit) are set to 1. In addition, B32 to B42 are set to a special value or set to a value that is the same as the AID field. Optionally, in FIG. 12, the first 11 bits that are in the second four bytes and that are set to the special value may also be referred to as a dummy identifier (dummy identity).

Optionally, the STA information field may be further used to indicate at least one second AP with which the STA needs to perform channel sounding and feedback. In other words, when channel sounding procedure includes a plurality of APs, the STA may feed back CSI of a part of second APs only. Therefore, feedback indication information may be carried in the STA information field, to indicate CSI of APs that the STA needs to feed back. Optionally, in this application, the feedback indication information may be a bitmap (bitmap) in the STA information field. Each bit in the bitmap is in a one-to-one correspondence with each second AP in a specific order. A bit set to 1 in the bitmap indicates that the STA needs to feed back CSI of a second AP corresponding to the bit. Optionally, the feedback indication information may alternatively be located in an AP identifier list field in the NDPA frame, or may alternatively be located in a subsequent BFRP trigger (BFRP Trigger) frame. This is not limited in this application.

Optionally, the STA information field may further include fields such as an association identifier field, a partial bandwidth information (Partial BW (Bandwidth) information) field, a feedback type and number group (Feedback Type and Number group) field, a codebook size (Codebook size) field, and number of columns (Nc (number of columns)) fields (including number of columns fields AP 1 to AP n).

Optionally, in this application, there may be one second AP. In other words, the system may include only the first AP (AP 1), one second AP (AP 2), and at least one STA. Correspondingly, in this embodiment, the NDPA frame may further carry sending object indication information, where the sending object indication information is used to notify the STA whether a subsequent NDP frame is sent by the first AP or another AP (namely, the second AP). The indication information may be located in a common information field, or may be located in an AP information field, or may be located in a STA information field in the EHT NDPA frame. This is not limited in this application.

It should be noted that lengths of the common information field, the AP information field, and the STA information field may be the same or different, that is, values of K, J, and L may be the same or different. This is not limited in this application.

Optionally, in a channel sounding procedure in this application, the NDPA frame may be sent by the first AP. Alternatively, NDPA frames may be sent by the first AP and the second AP at the same time. If the AP and the second AP send the NDPA frame at the same time, the first AP (for example, AP 1) may send the NDPA trigger frame to the second APs (for example, AP 2 and AP 3), to trigger the second AP and the first AP to broadcast NDPA frames at the same time. Information carried in the NDPA trigger frame includes but is not limited to the information carried in the first indication frame in the scenario 1 and the scenario 2. To be specific, AP 1 may notify, by using the NDPA trigger frame, AP 2 and AP 3 of an occasion for sending an NDPA frame, for example: an interval of predetermined duration after the NDPA trigger frame is sent, where the predetermined duration may be SIFS. This is not limited in this application. In addition, the NDPA trigger frame may be further used to indicate content that needs to be carried in NDPA frames sent by AP 2 and AP 3. Correspondingly, AP 2 and AP 3 may send, based on an indication of the NDPA trigger frame, NDPA frames that carry same AP ID information and STA ID information. In this embodiment, a plurality of APs may send NDPA frames carrying same information (for example, information such as identification information of an AP and/or identification information of a STA) at a same time, to expand and enhance a coverage of the NDPA frames.

Optionally, as shown in any one of FIG. 7 to FIG. 12, the EHT NDPA frame may further include but is not limited to: a frame control (Frame Control) field, a duration (Duration) field, an RA field, a TA field, a sounding dialog token field, a frame check sequence (Frame Check Sequence, FCS) field, and the like. Optionally, the EHT NDPA frame may further include fields such as a number of STAs field, a number of APs field, and an AP list field (which not shown in the figure). This is not limited in this application. For functions of and information included in the foregoing fields, refer to the conventional technology. Details are not described in this application.

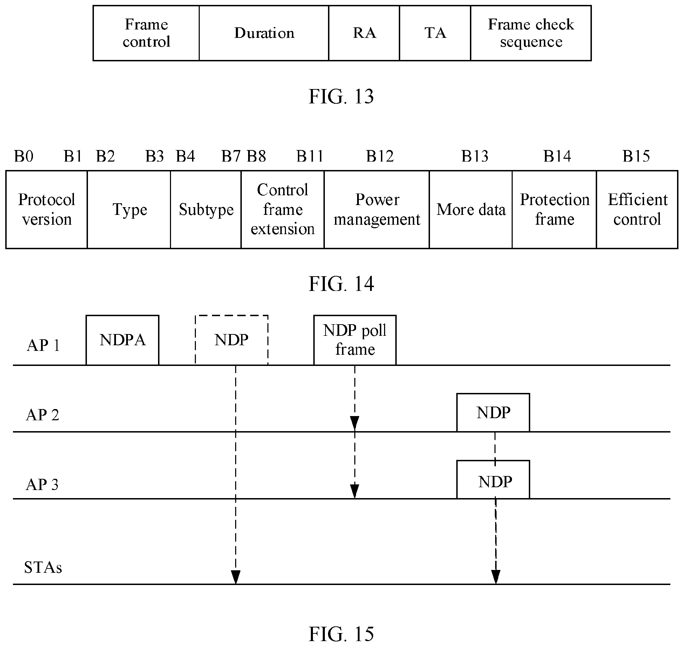

Optionally, in this application, a frame structure of an NDP poll frame may be shown in FIG. 13. In FIG. 13, the NDP poll frame may include but is not limited to a frame control field, a duration field, an RA field, a TA field, and an FCS field. As described above, the second AP may determine, based on the MAC address carried in the RA field, whether to be scheduled to participate in channel sounding. Optionally, the control frame type information described above may be carried in a frame control field. Specifically, the frame control field includes a type field and a subtype field. Type information may be set to 1, to indicate that the type of the frame is a control frame. The subtype field may be set to 6, to indicate that a control frame extension (control frame extension) field takes effect, where the control frame extension field includes control frame indication information that is used to indicate that a type of the NDP poll frame is a trigger type frame. Optionally, the control frame indication information may be carried in unused bits in the control frame extension field, for example, bits B0, B1, and B11. Optionally, the subtype field may be further set to 2 or another digit that is not used in an existing standard. This is not limited in this application. FIG. 14 is a schematic diagram of a frame structure of a frame control field. In FIG. 14, B8 to B11 represent a control frame extension field. Correspondingly, a second AP receiving the NDP poll frame may determine, by reading information in the control frame extension field, whether to be triggered to send an NDP frame.

Optionally, in this application, the NDP poll frame may alternatively be an NDPA frame. To be specific, the NDP poll frame uses a frame structure of the NDPA frame, to implement a function of triggering a second AP to send an NDP frame. The type field and the subtype field in the frame control field in the NDPA frame are used to indicate that a type of the frame is an NDPA frame. The RA field may be set to address information (for example, MAC address information) of the second AP (for example, AP 2). The TA field may be set to address information (for example, MAC address information) of the first AP (namely, AP 1). In this embodiment, if AP 2 detects that a MAC address in the RA matches a local MAC address of AP 2, and the NDPA frame is an NDPA frame that AP 2 receives at the second time, AP 2 may determine that the frame type of the frame is an NDP poll frame. Optionally, when the NDP poll frame is an NDPA frame, a frame structure of the NDP poll frame may be the structure of the NDPA frame shown in any one of FIG. 7 to FIG. 12. This is not limited in this application.

In conclusion, in this embodiment of this application, a first AP may trigger, by using an NDP poll frame, at least one second AP to send a channel sounding frame, to avoid a problem that a channel sounding procedure is interrupted because any second AP fails to send a channel sounding frame. Therefore, robustness of channel sounding is improved, and resource utilization is improved (in other words, compared with a case in the conventional technology in which after the interruption, second indication information needs to be rebroadcast from the first AP, this application does not need to retransmit the second indication information, and only an AP that fails to be broadcast needs to be specified for rebroadcasting, or the AP that fails to be broadcast is skipped and an operation of a next time is performed, to be specific, sending of a channel sounding frame of another AP is performed, so that resource utilization is improved).

### Scenario 2

With reference to FIG. 4, FIG. 15 is a schematic flowchart of a channel sounding method according to an embodiment of this application. FIG. 15 includes the following steps.

Step 201: AP 1 sends an announcement frame.

AP 1 sends the announcement frame, where the announcement frame may be an NDPA frame, to indicate AP 2, AP 3, STA 1, and STA 2 to participate in a channel sounding procedure.

Optionally, AP 1 sends an NDP frame, so that STA 1 and/or STA 2 perform channel sounding on a downlink channel of AP 1.

For specific details of this step, refer to step 101. Details are not described herein.

Step 202: AP 1 sends an NDP poll frame to AP 2 and AP 3.

Optionally, in this application, in FIG. 15, the AP 1 may simultaneously send the NDP poll frame to two or more second APs each time, to trigger a triggered AP that receives the NDP poll frame to send an NDP frame.

For example, optionally, AP 1 stores an AP list, and the list may record identification information of APs (excluding AP 1) participating in the current channel sounding procedure, and AP 1 may send NDP poll frames to two APs at a time based on an order of the list. For example, the order of the list is AP 2, AP 3, AP 4, and AP 5 (where AP 4 and AP 5 are not shown in the figure), then AP 1 may send NDP poll frames to AP 2 and AP 3, and after monitoring NDP frames broadcast by AP 2 and AP 3, send NDP poll frames to AP 4 and AP 5 based on the order of the list. Optionally, after predetermined duration, if AP 1 does not receive, for example, an NDP frame broadcast by AP 2, AP 1 may resend the NDP poll frame to AP 2 (and may repeat the sending for a plurality of times). Optionally, AP 1 may directly send NDP poll frames to AP 4 and AP 5 after the predetermined duration.

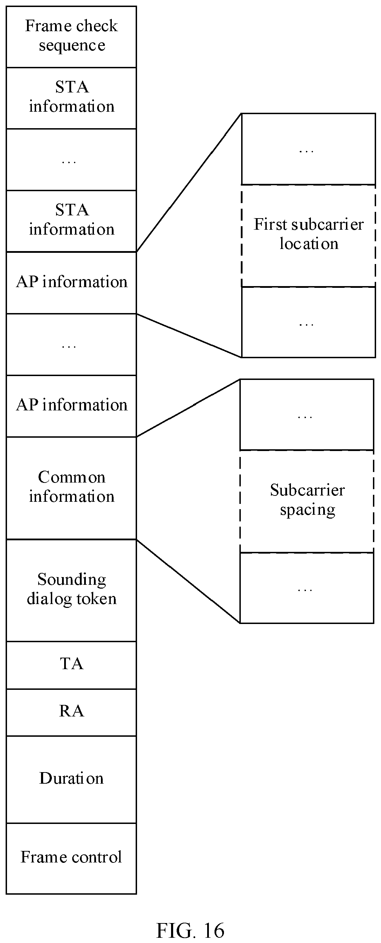

Optionally, in this application, if AP 1 simultaneously sends NDP poll frames to two or more APs, the NDP poll frame may carry resource information, where the resource information is used to indicate second APs each that receive the NDP poll frames to send an NDP frame on a specified channel resource at a same moment, so that NDP frames sent by different second APs occupy only some subcarriers, and subcarriers occupied by the APs do not overlap each other. Therefore, the APs (the first AP and the second APs) and/or the STA can monitor NDP frames sent by a plurality of APs at a same time. For example, in a possible implementation, if two APs (for example, AP 2 and AP 3) each send an NDP frame at a same time, AP 2 may occupy an odd-numbered subcarrier, in other words, send the NDP frame on the odd-numbered subcarrier. AP 3 may occupy an even-numbered subcarrier, in other words, send the NDP frame on the even-numbered subcarrier. In another possible implementation, it is assumed that there are m subcarriers in total, and k second APs each broadcast an NDP frame at a same time, an i^{th} (1≤i≤k) AP occupies only an i^{th}, (i+k)^{th}, (i+2k)^{th}, (i+3k)^{th}, ..., (i+nk)^{th} subcarriers, where i+nk is a maximum integer less than or equal to m. In this embodiment, when broadcasting an NDP frame, a second AP (for example, AP 2) needs to determine information about a subcarrier occupied by the second AP, where the information about the subcarrier includes a value i that is used to indicate a start location of the subcarrier (or may be referred to as first subcarrier location information) occupied by the AP, and a value k of a spacing between two adjacent subcarriers. Optionally, the values i and k may be carried in the NDP poll frame or the NDPA frame. Optionally, the value i may be carried in the AP information field, and the value k may be carried in the common information field, as shown in FIG. 16. Optionally, the value i may be carried in the sending order indication mentioned in the foregoing embodiment. In other words, the sending order indication may be reused to indicate the value i, and there is a correspondence between a sending order and a value i. For example, the sending order is equal to the value i. Optionally, the value k may be carried in the second indication information mentioned in the foregoing embodiment. In other words, there is a correspondence between the total quantity that is of APs participating in coordination and that is indicated in the second indication information and the value k. For example, the total quantity of APs participating in coordination is equal to the value k.

Other details are similar to step 102, and details are not described herein.

Step 203: The triggered second AP sends a channel sounding frame.

Specifically, two or more second APs that receive the NDP poll frame may send NDP frames on a specified channel resource at a same moment based on the resource information indicated in the NDP poll frame.

Step 203: The at least one STA performs channel sounding based on the NDP frame.

For specific details, refer to step 103. Details are not described herein again.

Optionally, in a channel sounding procedure in this application, the announcement frame may be sent by the first AP. Alternatively, announcement frames may be sent by the first AP and the second AP. For specific details, refer to the scenario 1. Details are not described herein again.

### Scenario 3

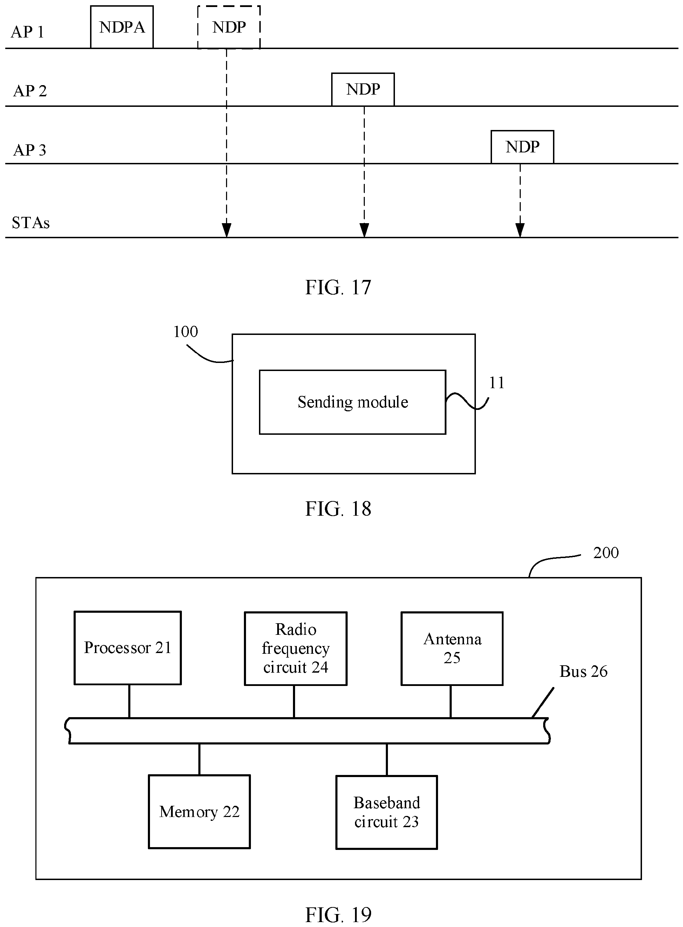

With reference to FIG. 4, FIG. 17 is a schematic flowchart of a channel sounding method according to an embodiment of this application. FIG. 17 includes the following steps.

Step 301: A first AP sends an announcement frame, where the announcement frame carries channel sounding frame sending order information.

Specifically, in this application, the first AP sends the announcement frame, where the announcement frame is used to indicate at least one second AP and at least one STA that need to participate in a current channel sounding procedure, and is further used to indicate an order for the at least one second AP to send an NDP frame. Optionally, the announcement frame may include NDP sending order information. Correspondingly, the second AP may determine, by reading the NDP sending order information, an order of the second AP in sending the NDP frame.

Optionally, if the announcement frame is an EHT NDPA frame, the NDP sending order information may be carried in an AP information field. For example, the AP information field includes identification information of AP 2 and NDP sending order information of AP 2. Correspondingly, after successfully matching the identification information of AP 2 with the identification information in the AP information field, AP 2 continues to read subsequent bits in the AP information field to obtain information such as the NDP sending order information. For a specific frame structure of the NDPA, refer to a schematic diagram of a structure of any one of the foregoing EHT NDPA frames. Details are not described herein again.

Optionally, refer to FIG. 17. For example, AP 1 sends an NDPA frame, where the NDPA frame includes at least one AP information field, and each AP information field carries identification information of a second AP and NDP sending order information corresponding to the second AP.

It should be noted that in this scenario, in addition to a function of indicating an NDP sending order, the NDPA frame may further implement functions in the scenario 1 and/or the scenario 2. For example, the NDPA frame may be used to indicate whether the first AP sends an NDP frame. Optionally, the NDPA frame may further carry identification information of the second AP and the STA, to indicate the second AP and the STA to participate in a function such as channel sounding. For other specific details, refer to the scenario 1 and the scenario 2. Details are not described herein. It should be noted that for a specific frame structure of the NDPA, refer to a schematic diagram of a structure of any one of the foregoing EHT NDPA frames. Details are not described herein again.

Step 302: The at least one second AP sequentially sends the channel sounding frame based on channel sounding frame sending order information.

Specifically, in this application, after receiving the announcement frame (for example, the NDPA frame), the second APs (for example, AP 2 and AP 3) read NDP sending order information carried in the announcement frame, and sequentially send channel sounding information in an order indicated in the NDP sending order information.

Refer to FIG. 17. For example, a sending order indicated in the NDP sending order information is AP 1, AP 2, and AP 3. AP 1 sends an NDP frame, AP 2 sends an NDP frame after monitoring the NDP frame sent by AP 1 (or after SIFS), and AP 3 sends an NDP frame of AP 3 after monitoring the NDP frame of AP 2.

For other specific details, refer to the scenario 1 and the scenario 2. Details are not described herein.

Step 303: The at least one STA performs channel sounding based on the channel sounding frames.

For other specific details, refer to the scenario 1 and the scenario 2. Details are not described herein.

The foregoing mainly describes the solutions provided in the embodiments of the present invention from a perspective of interaction between network elements. It can be understood that, to implement the foregoing functions, the AP includes corresponding hardware structures and/or software modules for performing the functions. A person skilled in the art should be easily aware that units, algorithms, and steps in the examples described with reference to the embodiments disclosed in this specification can be implemented by hardware or a combination of hardware and computer software in the embodiments of the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of the present invention, the AP may be divided into functional modules based on the foregoing method examples. For example, each functional module may be obtained through division based on a corresponding function, or two or more functions may be integrated into one processing module. The foregoing integrated module may be implemented in a form of hardware, or may be implemented in a form of a software function module. It should be noted that, in the embodiments of the present invention, division into the modules is an example, and is merely logical function division. In actual implementation, another division manner may be used.

When the respective function modules are obtained through division based on the respective functions, FIG. 18 is a possible schematic diagram of a structure of an apparatus 100 on a first access point side used in the foregoing embodiments. As shown in FIG. 18, the apparatus 100 may include a sending module 11 and an obtaining module 12. The sending module 11 may be configured to support a first access point in performing step 101, step 102, step 201, step 202, and step 301 in the foregoing embodiment, in other words, the step of "sending an announcement frame and/or a channel sounding poll frame".

In another example, FIG. 19 is a schematic block diagram of a communication apparatus 200 on a first access point side according to an embodiment of this application. The apparatus 200 in this embodiment of this application may be the first access point in the foregoing method embodiments, and the apparatus 200 may be configured to perform some or all functions of the first access point in the foregoing method embodiments. The apparatus 200 may include a processor 21, a baseband circuit 22, a radio frequency circuit 24, and an antenna 25. Optionally, the apparatus 200 may further include a memory 22. Components of the communication apparatus 200 are coupled together by using a bus 26. In addition to a data bus, the bus system 26 further includes a power bus, a control bus, and a status signal bus. However, for clarity of description, various buses are denoted as the bus system 26 in the figure.

The processor 21 may be configured to control the first access point, and is configured to perform processing performed by the first access point in the foregoing embodiments. The processor 21 may perform a processing process related to the first access point in the foregoing method embodiments and/or another process used for the technology described in this application. Further, the processor 21 may run an operating system, is responsible for managing the bus, and may execute a program or instructions stored in the memory.

The baseband circuit 23, the radio frequency circuit 24, and the antenna 25 may be configured to support the first access point and the second access point or station in the foregoing embodiments in receiving and sending information, to support wireless communication between the first access point and another node. In an example, the baseband circuit 23 generates signaling (for example, an announcement frame and/or a channel sounding poll frame) through encoding and encapsulation according to a protocol. The radio frequency circuit performs processing such as analog conversion, filtering, amplification, and up-conversion on the signaling, and the signaling obtained after processing is sent to the second access point through the antenna 25. It can be understood that, the baseband circuit 23, the radio frequency circuit 24, and the antenna 25 may be further configured to support communication between the first access point and another network entity, for example, to support communication between the first access point and a network element on a core network side.

The memory 22 may be configured to store program code and data of the first access point. A person skilled in the art may easily understand that the memory 22 or any part thereof may be located outside the apparatus 200. For example, the memory 22 may include a transmission line and/or a computer product that is separated from a wireless node. All these media can be accessed by the processor 21 through the bus interface 26. Alternatively, the memory 22 or any portion thereof may be integrated into the processor 21, for example, may be a high-speed cache and/or a general-purpose register.

It can be understood that FIG. 19 shows only a simplified design of the first access point. During actual application, for example, the first access point may include any quantity of transmitters, receivers, processors, memories, and the like, and all first access points that can implement the present invention fall within the protection scope of the present invention.

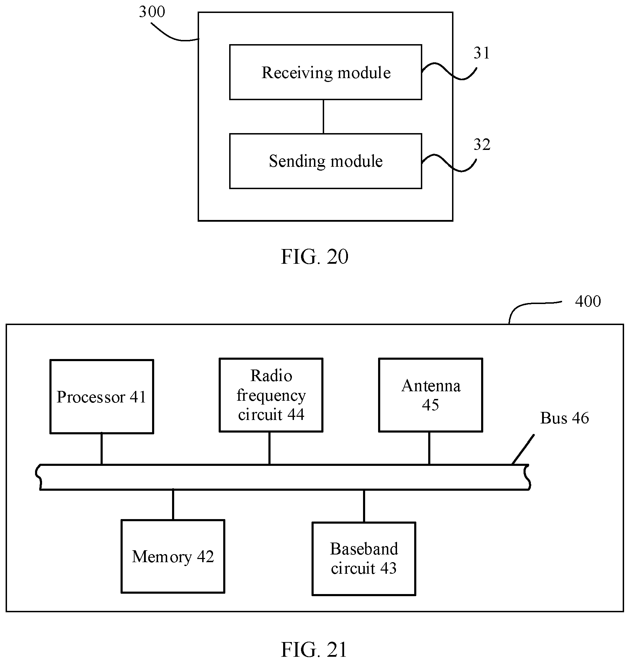

FIG. 20 is a schematic block diagram of an apparatus 300 on a second access point side according to an embodiment of this application. In an embodiment, the apparatus 300 shown in FIG. 20 may correspond to an apparatus on a second access point side in the foregoing method embodiments, and may have any function of the second access point in the method embodiments. Optionally, the apparatus 300 in this embodiment of this application may be a second access point or a chip in the second access point. The apparatus 300 may include a receiving module 31 and a sending module 32. The receiving module 31 may be configured to receive signaling (for example, an announcement frame and/or a channel sounding poll frame) or data sent by the first AP in the foregoing method embodiments. The sending module 32 may be configured to send signaling (for example, a channel sounding frame) in the foregoing method embodiments.

It should be understood that the apparatus 300 according to this embodiment of this application may correspond to the second access point in the methods of the foregoing embodiments, and the foregoing and other management operations and/or functions of the modules in the apparatus 300 are intended to implement corresponding steps in the foregoing methods. For brevity, details are not described herein again.

In another example, FIG. 21 is a schematic block diagram of a communication apparatus 400 on a second access point side according to an embodiment of this application. The apparatus 400 in this embodiment of this application may be the second access point in the foregoing method embodiments, and the apparatus 400 may be configured to perform some or all functions of the second access point in the foregoing method embodiments. The apparatus 400 may include a processor 41, a baseband circuit 44, a radio frequency circuit 44, and an antenna 45. Optionally, the apparatus 400 may further include a memory 42. Components of the communication apparatus 400 are coupled together by using a bus 46. In addition to a data bus, the bus system 46 further includes a power bus, a control bus, and a status signal bus. However, for clarity of description, various buses are denoted as the bus system 46 in the figure.

The processor 41 may be configured to control the second access point, and is configured to perform processing performed by the second access point in the foregoing embodiments. The processor 41 may perform a processing process related to the second access point in the foregoing method embodiments and/or another process used for the technology described in this application. Further, the processor 41 may run an operating system, is responsible for managing the bus, and may execute a program or instructions stored in the memory.

The baseband circuit 43, the radio frequency circuit 44, and the antenna 45 may be configured to support the second access point and the first access point or station in the foregoing embodiments in receiving and sending information, to support wireless communication between the second access point and another node. In one example, signaling sent by the first access point is received through the antenna 44; the radio frequency circuit 44 performs processing such as filtering, amplification, down-conversion, and digitization on the signaling; the baseband circuit 43 performs baseband processing such as decapsulation according to a protocol and decoding on the signaling; and the processor 41 performs processing to restore service data and signaling information sent by the station. In another example, the processor 41 may process a channel sounding frame sent by the second access point; the baseband circuit 43 performs baseband processing such as encapsulation according to a protocol and encoding on the channel sounding frame; the radio frequency circuit 44 performs radio frequency processing such as analog conversion, filtering, amplification, and up-conversion on channel sounding frame; and then the channel sounding frame is sent to the first access point AP through the antenna 44. It can be understood that, the baseband circuit 43, the radio frequency circuit 44, and the antenna 44 may be further configured to support communication between the second access point and another network entity, for example, to support communication between the second access point and a network element on a core network side.

The memory 42 may be configured to store program code and data of the second access point. In FIG. 21, the memory 42 is shown as separated from the processor 41. However, it is readily figured out by a person skilled in the art that the memory 42 or any portion thereof may be located outside the apparatus 400. For example, the memory 42 may include a transmission line and/or a computer product that is separated from a wireless node. All these media can be accessed by the processor 41 through the bus interface 46. Alternatively, the memory 42 or any portion thereof may be integrated into the processor 41, for example, may be a high-speed cache and/or a general-purpose register.

It can be understood that FIG. 21 shows only a simplified design of the second access point. During actual application, for example, the second access point may include any quantity of transmitters, receivers, processors, memories, and the like, and all second access points that can implement the present invention fall within the protection scope of the present invention.

An embodiment of this application further provides a computer storage medium, where the computer-readable storage medium stores instructions, and the instructions can be executed by one or more processors on a processing circuit. When the instructions are run on a computer, the computer is enabled to perform the methods in the foregoing aspects. Optionally, the computer storage medium is a non-volatile readable storage medium.

An embodiment of this application further provides a chip system. The chip system includes a processor, configured to support the first access point or the second access point in implementing the functions in the foregoing embodiments, for example, generating or processing data and/or information in the foregoing methods.

In a possible design, the chip system may further include a memory. The memory is configured to store program instructions and data for the first access point or the second access point. The chip system may include a chip, or may include a chip and another discrete device. The processor is configured to execute the program instructions, so that a communication apparatus on which the chip system is mounted implements the method and the function of the AP in any one of the foregoing embodiments. Optionally, the memory may be located outside the processor and is an external storage medium, or may be located inside the processor and is an internal storage medium of the processor.

An embodiment of this application further provides a processor, configured to be coupled to a memory. The processor is configured to perform the method and the function of the first AP in any one of the foregoing embodiments.

An embodiment of this application further provides a processor, configured to be coupled to a memory. The processor is configured to perform the method and the function of the second AP in any one of the foregoing embodiments.

An embodiment of this application further provides a chip, including a processing circuit and an input/output circuit. The input/output circuit is configured to input signaling or data to the processing circuit, and is further configured to output signaling or data generated by the processing circuit. The processing circuit is configured to process signaling or data, so that a communication apparatus on which the chip is mounted can implement the method and the function of the first AP in any one of the foregoing embodiments.

An embodiment of this application further provides a chip, including a processing circuit and an input/output circuit. The input/output circuit is configured to input signaling or data to the processing circuit, and is further configured to output signaling or data generated by the processing circuit. The processing circuit is configured to process signaling or data, so that a communication apparatus on which the chip is mounted can implement the method and the function of the second AP in any one of the foregoing embodiments.

An embodiment of this application further provides a computer program product including instructions. When the computer program product runs on a computer, the computer is enabled to perform the method and function related to the first AP in any one of the foregoing embodiments.

An embodiment of this application further provides a computer program product including instructions. When the computer program product runs on a computer, the computer is enabled to perform the method and function related to the second AP in any one of the foregoing embodiments.

An embodiment of this application further provides a wireless communication system. The system includes the first access point and the at least one second access point in the foregoing embodiments.

Methods or algorithm steps described in combination with the content disclosed in this embodiment of the present invention may be implemented by hardware, or may be implemented by a processor by executing software instructions. The software instructions may include a corresponding software module. The software module may be stored in a random access memory (Random Access Memory, RAM for short), a flash memory, a read-only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in AP. Certainly, the processor and the storage medium may exist in the AP as discrete components.

The present invention is defined by the appended independent claims.

## Claims

1. A channel sounding method, comprising:
sending, by a first access point AP, an announcement frame, wherein the announcement frame is used to indicate at least one second AP and at least one station STA to participate in channel sounding; and
sequentially sending, by the first AP, a channel sounding poll frame to each second AP in the at least one second AP, wherein the channel sounding poll frame is used to trigger the at least one second AP to send a channel sounding frame,
wherein the announcement frame comprises at least one AP information field, a length of one AP information field is an integer multiple of 4 bytes, the 28th bit in every 4 bytes in the AP information field is set to 1, the at least one AP information field is in a one-to-one correspondence with each second AP in the at least one second AP, and each AP information field comprises identification information of a corresponding second AP.

2. A channel sounding method, comprising:
receiving, by a second access point AP, an announcement frame sent by a first AP, wherein the announcement frame is used to indicate the second AP and at least one STA to participate in a channel sounding procedure;
receiving, by the second AP, a channel sounding poll frame sent by the first AP, wherein the channel sounding poll frame is used to trigger the second AP to send a channel sounding frame; and sending, by the second AP, the channel sounding frame,
wherein the announcement frame comprises at least one AP information field, a length of one AP information field is an integer multiple of 4 bytes, the 28th bit in every 4 bytes in the AP information field is set to 1, the at least one AP information field is in a one-to-one correspondence with each second AP in at least one second AP participating in the channel sounding procedure,
and each AP information field comprises identification information of a corresponding second AP.

3. The method according to claim 1 or 2, wherein the announcement frame and the channel sounding poll frame are null data packet announcement NDPA frames; and
the channel sounding poll frame comprises control frame type information, wherein the control frame type information is used to indicate that the channel sounding poll frame is a type frame used to trigger the at least one second AP to send the channel sounding frame.

4. The method according to any one of claims 1 to 3, wherein
the announcement frame comprises first indication information, wherein the first indication information is used to indicate whether the first AP sends a channel sounding frame.

5. The method according to claims 1 or 2, wherein the identification information of the second AP is an identifier of the second AP or an identifier of a STA in a device in which the second AP is located; and the identifier of the second AP is determined through negotiation between the first AP and the second AP in advance.

6. The method according to claim 1 or 2, wherein the first 11 bits in every four bytes in the AP information field are set to a special value, and are used to indicate that media access control MAC address information of the second AP is carried in the AP information field, and the identification information of the second AP is a MAC address of the second AP.

7. The method according to claim 1 or 2, wherein the AP information field further comprises one or more of the following: a sending order indication and a training sequence quantity indication;
the sending order indication is used to indicate an order for the second AP corresponding to the AP information field to send the channel sounding frame; and
the training sequence quantity indication is used to indicate a quantity of training sequences comprised in the channel sounding frame sent by the second AP corresponding to the AP information field.

8. The method according to any one of claims 1 to 7, wherein the announcement frame further comprises a common information field, and a length of the common information field is an integer multiple of 4 bytes; and
the first 11 bits in every four bytes in the common information field are set to a special value, and the 28th bit in every four bytes in the common information field is set to 1.

9. The method according to claim 8, wherein the common information field comprises second indication information, wherein the second indication information is used to indicate a quantity of the at least one second AP, or used to indicate a total quantity of the at least one second AP and the first AP.

10. The method according to any one of claims 1 to 9, wherein the announcement frame or the channel sounding poll frame comprises resource indication information, wherein the resource indication information is used to indicate the at least one second AP to send the channel sounding frame on a specified channel resource.

11. A communication apparatus applied to a first access point AP side, comprising:
a sending module, configured to send an announcement frame, wherein the announcement frame is used to indicate at least one second AP and at least one STA to participate in a channel sounding procedure, wherein
the sending module is further configured to sequentially send a channel sounding poll frame to each second AP in the at least one second AP, wherein the channel sounding poll frame is used to trigger the at least one second AP to send a channel sounding frame,
wherein the announcement frame comprises at least one AP information field, a length of one AP information field is an integer multiple of 4 bytes, the 28th bit in every 4 bytes in the AP information field is set to 1, the at least one AP information field is in a one-to-one correspondence with each second AP in the at least one second AP, and each AP information field comprises identification information of a corresponding second AP.

12. A communication apparatus applied to a second access point AP side, comprising:
a receiving module, configured to receive an announcement frame sent by a first AP, wherein the announcement frame is used to indicate the second AP and at least one STA to participate in a channel sounding procedure, wherein
the receiving module is further configured to receive a channel sounding poll frame sent by the first AP, wherein the channel sounding poll frame is used to trigger the second AP to send a channel sounding frame; and
a sending module, configured to send the channel sounding frame,
wherein the announcement frame comprises at least one AP information field, a length of one AP information field is an integer multiple of 4 bytes, the 28th bit in every 4 bytes in the AP information field is set to 1, the at least one AP information field is in a one-to-one correspondence with each second AP in at least one second AP participating in the channel sounding procedure,
and each AP information field comprises identification information of a corresponding second AP.

13. The communication apparatus according to claim 11 or 12, wherein the announcement frame and the channel sounding poll frame are null data packet announcement NDPA frames; and
the channel sounding poll frame comprises control frame type information, wherein the control frame type information is used to indicate that the channel sounding poll frame is a type frame used to trigger the at least one second AP to send the channel sounding frame.

14. The apparatus according to any one of claims 11 to 13, wherein
the announcement frame comprises first indication information, wherein the first indication information is used to indicate whether the first AP sends a channel sounding frame.

## Patentansprüche

1. Channel Sounding-Verfahren, umfassend:
Senden eines Ankündigungsrahmens durch einen ersten Zugangspunkt (AP), wobei der Ankündigungsrahmen dazu verwendet wird, mindestens einen zweiten AP und mindestens eine Station (STA) anzuweisen, sich am Channel Sounding zu beteiligen; und sequentielles Senden eines Channel Sounding-Polling-Rahmens durch den ersten AP an jeden der zweiten AP von dem mindestens einen zweiten AP, wobei der Channel Sounding-Polling-Rahmen dazu verwendet wird, den mindestens einen zweiten AP zum Senden eines Channel Sounding-Rahmens zu veranlassen,
wobei der Ankündigungsrahmen mindestens ein AP-Informationsfeld umfasst, eine Länge eines AP-Informationsfelds ein ganzzahliges Vielfaches von 4 Bytes ist, in allen 4 Bytes in dem AP-Informationsfeld das 28. Bit auf 1 gesetzt ist, das mindestens eine AP-Informationsfeld in einer Eins-Zu-Eins-Entsprechung mit jedem der zweiten AP von dem mindestens einen zweiten AP steht und jedes AP-Informationsfeld Identifikationsinformationen eines entsprechenden zweiten AP umfasst.

2. Channel Sounding-Verfahren, umfassend:
Empfangen eines von einem ersten AP gesendeten Ankündigungsrahmens durch einen zweiten Zugangspunkt AP, wobei der Ankündigungsrahmen dazu verwendet wird, den zweiten AP und mindestens eine STA anzuweisen, sich an einer Channel Sounding-Prozedur zu beteiligen;
Empfangen eines von dem ersten AP gesendeten Channel Sounding-Polling-Rahmens durch den zweiten AP, wobei der Channel Sounding-Polling-Rahmen dazu verwendet wird, den zweiten AP zum Senden eines Channel Sounding-Rahmens zu veranlassen; und Senden des Channel Sounding-Rahmens durch den zweiten AP,
wobei der Ankündigungsrahmen mindestens ein AP-Informationsfeld umfasst, eine Länge eines AP-Informationsfelds ein ganzzahliges Vielfaches von 4 Bytes ist, in allen 4 Bytes das 28. Bit in dem AP-Informationsfeld auf 1 gesetzt ist, das mindestens eine AP-Informationsfeld in einer Eins-Zu-Eins-Entsprechung mit jedem der zweiten AP von dem mindestens einen zweiten AP, der an der Channel Sounding-Prozedur beteiligt ist, steht und jedes AP-Informationsfeld Identifikationsinformationen eines entsprechenden zweiten AP umfasst.

3. Verfahren nach Anspruch 1 oder 2, wobei der Ankündigungsrahmen und der Channel Sounding-Polling-Rahmen Null-Datenpaket-Ankündigungsrahmen (NDPA-Rahmen) sind; und
der Channel Sounding-Polling-Rahmen Informationen vom Typ Steuerrahmen umfasst, wobei die Informationen vom Typ Steuerrahmen dazu verwendet werden, anzuzeigen, dass der Channel Sounding-Polling-Rahmen ein Rahmentyp ist, der dazu verwendet wird, den mindestens einen zweiten AP zum Senden des Channel Sounding-Rahmens zu veranlassen.

4. Verfahren nach einem der Ansprüche 1 bis 3, wobei der Ankündigungsrahmen erste Anzeigeinformationen umfasst, wobei die ersten Anzeigeinformationen dazu verwendet werden, anzuzeigen, ob der erste AP einen Channel Sounding-Rahmen sendet.

5. Verfahren nach Anspruch 1 oder 2, wobei die Identifikationsinformationen des zweiten AP eine Kennung des zweiten AP oder eine Kennung einer STA in einer Vorrichtung, in der sich der zweite AP befindet, sind; und die Kennung des zweiten AP im Voraus durch Aushandlung zwischen dem ersten AP und dem zweiten AP festgelegt wird.

6. Verfahren nach Anspruch 1 oder 2, wobei in allen vier Bytes im AP-Informationsfeld die ersten 11 Bits auf einen speziellen Wert gesetzt sind und dazu verwendet werden, anzuzeigen, dass Medienzugriffssteuerungsadressinformationen (MAC-Adressinformationen) des zweiten AP im AP-Informationsfeld übertragen werden und die Identifikationsinformationen des zweiten AP eine MAC-Adresse des zweiten AP sind.

7. Verfahren nach Anspruch 1 oder 2, wobei das AP-Informationsfeld ferner eines oder mehrere aus Folgendem umfasst: eine Sendereihenfolgeanzeige und eine Trainingsfolgenanzahlanzeige;
die Sendereihenfolgeanzeige wird dazu verwendet, dem dem AP-Informationsfeld entsprechenden zweiten AP einen Befehl, den Channel Sounding-Rahmen zu senden, anzuzeigen; und
die Trainingsfolgenanzahlanzeige dazu wird verwendet, die Anzahl der Trainingsfolgen anzugeben, die in dem Channel Sounding-Rahmen, der vom dem AP-Informationsfeld entsprechenden zweiten AP gesendet wurde, enthalten sind.

8. Verfahren nach einem der Ansprüche 1 bis 7, wobei der Ankündigungsrahmen ferner ein gemeinsames Informationsfeld umfasst und eine Länge des gemeinsamen Informationsfelds ein ganzzahliges Vielfaches von 4 Bytes ist; und
in allen vier Bytes in dem gemeinsamen Informationsfeld die ersten 11 Bits auf einen speziellen Wert gesetzt sind und in allen vier Bytes in dem gemeinsamen Informationsfeld das 28. Bit auf 1 gesetzt ist.

9. Verfahren nach Anspruch 8, wobei das gemeinsame Informationsfeld zweite Anzeigeinformationen umfasst, wobei die zweiten Anzeigeinformationen dazu verwendet werden, um eine Anzahl des mindestens einen zweiten AP anzuzeigen, oder dazu verwendet werden, um eine Gesamtanzahl des mindestens einen zweiten AP und des ersten AP anzuzeigen.

10. Verfahren nach einem der Ansprüche 1 bis 9, wobei der Ankündigungsrahmen oder der Channel Sounding-Polling-Rahmen Ressourcenanzeigeinformationen umfasst, wobei die Ressourcenanzeigeinformationen dazu verwendet werden, den mindestens einen zweiten AP anzuweisen, den Channel Sounding-Rahmen auf einer angegebenen Kanalressource zu senden.

11. Kommunikationsvorrichtung, die auf der Seite eines ersten Zugangspunkts (AP) verwendet wird, umfassend:
ein Sendemodul, das zum Senden eines Ankündigungsrahmens konfiguriert ist, wobei der Ankündigungsrahmen dazu verwendet wird, mindestens einen zweiten AP und mindestens eine STA anzuweisen, sich an einer Channel Sounding-Prozedur zu beteiligen, wobei
das Sendemodul, ferner dazu konfiguriert ist, an jeden der zweiten AP von dem mindestens einen zweiten AP sequentiell einen Channel Sounding-Polling-Rahmen zu senden, wobei der Channel Sounding-Polling-Rahmen dazu verwendet wird, den mindestens einen zweiten AP zum Senden eines Channel Sounding-Rahmens zu veranlassen,
wobei der Ankündigungsrahmen mindestens ein AP-Informationsfeld umfasst, eine Länge eines AP-Informationsfelds ein ganzzahliges Vielfaches von 4 Bytes ist, in allen 4 Bytes in dem AP-Informationsfeld das 28. Bit auf 1 gesetzt ist, das mindestens eine AP-Informationsfeld in einer Eins-Zu-Eins-Entsprechung mit jedem der zweiten AP von dem mindestens einen zweiten AP steht und jedes AP-Informationsfeld Identifikationsinformationen eines entsprechenden zweiten AP umfasst.

12. Kommunikationsvorrichtung, die auf der Seite eines zweiten Zugangspunkts (AP) verwendet wird, umfassend:
ein Empfangsmodul, das dazu konfiguriert ist, einen von einem ersten AP gesendeten Ankündigungsrahmens zu empfangen, wobei der Ankündigungsrahmen dazu verwendet wird, den zweiten AP und mindestens eine STA anzuweisen, sich an einer Channel Sounding-Prozedur zu beteiligen, wobei
das Empfangsmodul, ferner dazu konfiguriert ist, einen von dem ersten AP gesendeten Channel Sounding-Polling-Rahmens zu empfangen, wobei der Channel Sounding-Polling-Rahmen dazu verwendet wird, den zweiten AP zum Senden eines Channel Sounding-Rahmens zu veranlassen; und
ein Sendemodul, das zum Senden des Channel Sounding-Rahmens konfiguriert ist,
wobei der Ankündigungsrahmen mindestens ein AP-Informationsfeld umfasst, eine Länge eines AP-Informationsfelds ein ganzzahliges Vielfaches von 4 Bytes ist, in allen 4 Bytes das 28. Bit in dem AP-Informationsfeld auf 1 gesetzt ist, das mindestens eine AP-Informationsfeld in einer Eins-Zu-Eins-Entsprechung mit jedem der zweiten AP von dem mindestens einen zweiten AP, der an der Channel Sounding-Prozedur beteiligt ist, steht und jedes AP-Informationsfeld Identifikationsinformationen eines entsprechenden zweiten AP umfasst.

13. Kommunikationsvorrichtung nach Anspruch 11 oder 12, wobei der Ankündigungsrahmen und der Channel Sounding-Polling-Rahmen Null-Datenpaket-Ankündigungsrahmen (NDPA-Rahmen) sind; und
der Channel Sounding-Polling-Rahmen Informationen vom Typ Steuerrahmen umfasst, wobei die Informationen vom Typ Steuerrahmen dazu verwendet werden, anzuzeigen, dass der Channel Sounding-Polling-Rahmen ein Rahmentyp ist, der dazu verwendet wird, den mindestens einen zweiten AP zum Senden des Channel Sounding-Rahmens zu veranlassen.

14. Vorrichtung nach einem der Ansprüche 11 bis 13, wobei der Ankündigungsrahmen erste Anzeigeinformationen umfasst, wobei die ersten Anzeigeinformationen dazu verwendet werden, anzuzeigen, ob der erste AP einen Channel Sounding-Rahmen sendet.

## Revendications

1. Procédé de sondage de canal, comprenant :
l'envoi, par un premier point d'accès AP, d'une trame d'annonce, dans lequel la trame d'annonce est utilisée pour indiquer au moins un second AP et au moins une station STA pour participer au sondage de canal ; et
l'envoi séquentiel, par le premier AP, d'une trame d'interrogation de sondage de canal à chaque second AP dans l'au moins un second AP, dans lequel la trame d'interrogation de sondage de canal est utilisée pour déclencher l'au moins un second AP pour envoyer une trame de sondage de canal,
dans lequel la trame d'annonce comprend au moins un champ d'informations AP, une longueur d'un champ d'informations AP est un multiple entier de 4 octets, le 28ème bit dans tous les 4 octets dans le champ d'informations AP est réglé sur 1, l'au moins un champ d'informations AP est en correspondance biunivoque avec chaque second AP dans l'au moins un second AP, et chaque champ d'informations AP comprend des informations d'identification d'un second AP correspondant.

2. Procédé de sondage de canal, comprenant :
la réception, par un second point d'accès AP, d'une trame d'annonce envoyée par un premier AP, dans lequel la trame d'annonce est utilisée pour indiquer le second AP et au moins une STA de participer à une procédure de sondage de canal ;
la réception, par le second AP, d'une trame d'interrogation de sondage de canal envoyée par le premier AP, dans lequel la trame d'interrogation de sondage de canal est utilisée pour déclencher le second AP afin d'envoyer une trame de sondage de canal ; et l'envoi, par le second AP, de la trame de sondage du canal,
dans lequel la trame d'annonce comprend au moins un champ d'informations AP, une longueur d'un champ d'informations AP est un multiple entier de 4 octets, le 28ème bit dans tous les 4 octets dans le champ d'informations AP est réglé sur 1, l'au moins un champ d'informations AP est en correspondance biunivoque avec chaque second AP dans au moins un second AP participant à la procédure de sondage de canal, et chaque champ d'informations AP comprend des informations d'identification d'un second AP correspondant.

3. Procédé selon la revendication 1 ou 2, dans lequel la trame d'annonce et la trame d'interrogation de sondage de canal sont des trames NDPA d'annonce de paquets de données nuls ; et
la trame d'interrogation de sondage de canal comprend des informations de type de trame de commande, dans lequel les informations de type de trame de commande sont utilisées pour indiquer que la trame d'interrogation de sondage de canal est une trame de type utilisée pour déclencher l'au moins un second AP pour envoyer la trame de sondage de canal.

4. Procédé selon l'une quelconque des revendications 1 à 3, dans lequel
la trame d'annonce comprend des premières informations d'indication, dans lequel les premières informations d'indication sont utilisées pour indiquer si le premier AP envoie une trame de sondage de canal.

5. Procédé selon la revendication 1 ou 2, dans lequel les informations d'identification du second AP sont un identifiant du second AP ou un identifiant d'une STA dans un dispositif dans lequel se trouve le second AP ; et l'identifiant du second AP est déterminé à l'avance par négociation entre le premier AP et le second AP.

6. Procédé selon la revendication 1 ou 2, dans lequel les 11 premiers bits dans tous les quatre octets du champ d'informations AP sont réglés sur une valeur spéciale et sont utilisés pour indiquer que les informations d'adresse MAC de contrôle d'accès au support du second AP sont transportées dans le champ d'informations AP, et les informations d'identification du second AP sont une adresse MAC du second AP.

7. Procédé selon la revendication 1 ou 2, dans lequel le champ d'informations AP comprend également un ou plusieurs des éléments suivants : une indication d'ordre d'envoi et une indication de quantité de séquence d'apprentissage ; l'indication d'ordre d'envoi est utilisée pour indiquer un ordre pour le second AP correspondant au champ d'informations AP d'envoyer la trame de sondage de canal ; et
l'indication de quantité de séquence d'apprentissage est utilisée pour indiquer une quantité de séquences d'apprentissage comprises dans la trame de sondage de canal envoyée par le second AP correspondant au champ d'informations AP.

8. Procédé selon l'une quelconque des revendications 1 à 7, dans lequel la trame d'annonce comprend également un champ d'informations commun, et une longueur du champ d'informations commun est un multiple entier de 4 octets ; et
les 11 premiers bits tous les quatre octets du champ d'informations communes sont définis sur une valeur spéciale, et le 28ème bit tous dans les quatre octets du champ d'informations communes est défini sur 1.

9. Procédé selon la revendication 8, dans lequel le champ d'informations communes comprend des secondes informations d'indication, dans lequel les secondes informations d'indication sont utilisées pour indiquer une quantité de l'au moins un second AP, ou utilisées pour indiquer une quantité totale de l'au moins un second AP et le premier AP.

10. Procédé selon l'une quelconque des revendications 1 à 9, dans lequel la trame d'annonce ou la trame d'interrogation de sondage de canal comprend des informations d'indication de ressource, dans lequel les informations d'indication de ressource sont utilisées pour indiquer à l'au moins un second AP d'envoyer la trame de sondage de canal sur un ressource de canal spécifiée.

11. Appareil de communication appliqué à un premier côté AP de point d'accès, comprenant :
un module d'envoi, configuré pour envoyer une trame d'annonce, dans lequel la trame d'annonce est utilisée pour indiquer au moins un second AP et au moins une STA pour participer à une procédure de sondage de canal, dans lequel
le module d'envoi est également configuré pour envoyer de manière séquentielle une trame d'interrogation de sondage de canal à chaque second AP dans l'au moins un second AP, dans lequel la trame d'interrogation de sondage de canal est utilisée pour déclencher l'au moins un second AP pour envoyer une trame de sondage de canal,
dans lequel la trame d'annonce comprend au moins un champ d'informations AP, une longueur d'un champ d'informations AP est un multiple entier de 4 octets, le 28ème bit dans tous les 4 octets dans le champ d'informations AP est réglé sur 1, l'au moins un champ d'informations AP est en correspondance biunivoque avec chaque second AP dans l'au moins un second AP, et chaque champ d'informations AP comprend des informations d'identification d'un second AP correspondant.

12. Appareil de communication appliqué à un second côté AP de point d'accès, comprenant :
un module de réception, configuré pour recevoir une trame d'annonce envoyée par le premier AP, dans lequel la trame d'annonce est utilisée pour indiquer le second AP et l'au moins une STA pour participer à une procédure de sondage de canal, dans lequel
le module de réception est également configuré pour recevoir une trame d'interrogation de sondage de canal envoyée par le premier AP, dans lequel la trame d'interrogation de sondage de canal est utilisée pour déclencher l'envoi par le second AP d'une trame de sondage de canal ; et
un module d'envoi, configuré pour envoyer la trame de sondage de canal,
dans lequel la trame d'annonce comprend au moins un champ d'informations AP, une longueur d'un champ d'informations AP est un multiple entier de 4 octets, le 28ème bit dans tous les 4 octets dans le champ d'informations AP est réglé sur 1, l'au moins un champ d'informations AP est en correspondance biunivoque avec chaque second AP dans au moins un second AP participant à la procédure de sondage de canal, et chaque champ d'informations AP comprend des informations d'identification d'un second AP correspondant.

13. Appareil de communication selon la revendication 11 ou 12, dans lequel la trame d'annonce et la trame d'interrogation de sondage de canal sont des trames NDPA d'annonce de paquets de données nuls ; et
la trame d'interrogation de sondage de canal comprend des informations de type de trame de commande, dans lequel les informations de type de trame de commande sont utilisées pour indiquer que la trame d'interrogation de sondage de canal est une trame de type utilisée pour déclencher l'au moins un second AP pour envoyer la trame de sondage de canal.

14. Appareil selon l'une quelconque des revendications 11 à 13, dans lequel
la trame d'annonce comprend des premières informations d'indication, dans lequel les premières informations d'indication sont utilisées pour indiquer si le premier AP envoie une trame de sondage de canal.
